(19) Europäisches Patentamt
European Patent Office
Office européen des brevets

(11) EP 1 728 140 B1

(12) FASCICULE DE BREVET EUROPEEN

(45) Date de publication et mention de la délivrance du brevet:
26.04.2017 Bulletin 2017/17

(21) Numéro de dépôt: 05729336.7

(22) Date de dépôt: 17.02.2005

(51) Int Cl.:
G06F 1/12 (2006.01)    G06F 1/14 (2006.01)

(86) Numéro de dépôt international:
PCT/FR2005/000379

(87) Numéro de publication internationale:
WO 2005/096123 (13.10.2005 Gazette 2005/41)

(54) **PROCEDE DE SYNCHRONISATION DE DONNEES, NOTAMMENT DISTRIBUEES, PRENANT EN COMPTE LES IMPRECISIONS ET DERIVES DES HORLOGES.**

VERFAHREN ZUR SYNCHRONISATION VON DATEN, WIE ZUM BEISPIEL VERTEILTEN DATEN, UNTER BERÜCKSICHTIGUNG VON TAKTDRIFT UND UNGENAUIGKEITEN

METHOD FOR THE SYNCHRONISATION OF DATA, SUCH AS DISTRIBUTED DATA, TAKING ACCOUNT OF CLOCK DRIFTS AND INACCURACIES

(84) Etats contractants désignés:
AT BE BG CH CY CZ DE DK EE ES FI FR GB GR HU IE IS IT LI LT LU MC NL PL PT RO SE SI SK TR

(30) Priorité: 03.03.2004 FR 0402189

(43) Date de publication de la demande:
06.12.2006 Bulletin 2006/49

(73) Titulaires:
• CENTRE NATIONAL DE LA RECHERCHE SCIENTIFIQUE -CNRS-
75794 Paris Cedex 16 (FR)
• UNIVERSITE DE TECHNOLOGIE DE COMPIEGNE
60205 Compiègne Cedex (FR)

(72) Inventeurs:
• BONNIFAIT, Philippe
F-60610 La Croix Saint Ouen (FR)

• CRUBILLE, Paul François Pierre
F-60350 Pierrefonds (FR)
• CHERFAOUI, Véronique Noëlle Marie
F-60000 Beauvais (FR)
• GNING, El Hadji Amadou
F-60200 Compiegne (FR)
• SHAWKY, Mohamed
60200 COMPIEGNE (FR)
• BEZET, Olivier Michel
F-18410 Argent sur Sauldre (FR)
• BRISSOT, Géry
F-60350 Chelles (FR)

(74) Mandataire: Gevers & Orès
41 avenue de Friedland
75008 Paris (FR)

(56) Documents cités:
EP-A- 0 042 924      EP-A- 1 380 918
US-A1- 2002 150 189

**Description**

L'invention porte sur un procédé pour déterminer une correspondance entre les temps indiqués par les horloges internes d'une pluralité de machines reliées à un réseau, telles que des capteurs ou des ordinateurs, ainsi que sur un procédé de synchronisation des données provenant desdites machines. Ces deux types de procédés sont intimement liés, le deuxième constituant une application directe du premier.

Dans ce contexte, «synchroniser des données» signifie les ordonner chronologiquement en fonction de leur temps d'acquisition ; dans un sens plus restreint, il signifie également «dater» ces mêmes données par rapport à une référence temporelle unique. « Synchroniser des horloges », par contre, signifie forcer ces dernières à indiquer le même temps à un instant donnè. Les demandes EP 0 042 924 et EP 1 380 918 décrivent des procédés de synchronisation selon l'art antérieur.

Un procédé de synchronisation des données est nécessaire, par exemple, dans le domaine de la validation des dispositifs d'aide à la conduite automobile. Pour étudier l'influence de ces dispositifs sur le comportement d'un conducteur, des voitures automobiles de test sont équipées de différents capteurs reliés en réseau et permettant d'acquérir à la fois des informations sur le véhicule (vitesse moyenne, accélération...), sur l'interaction avec d'autres véhicules (distance et vitesse relatives...) et sur le comportement du conducteur (temps de réaction, direction du regard...). Les données acquises par ces différents capteurs et celles enregistrées par les dispositifs d'aide à la conduite doivent être synchronisées pour pouvoir être exploitées par un ergonome, et la précision de la synchronisation doit être meilleure qu'une milliseconde, et de préférence meilleure que 100 $\mu$s, pour des cadences d'acquisition des données pouvant atteindre 1 kHz. En même temps, on souhaite utiliser des dispositifs matériels standard et disposer d'une grande flexibilité, permettant de reconfigurer le réseau d'acquisition en cours d'utilisation, et d'une grande robustesse vis-à-vis des pannes et des problèmes de connexion.

La solution la plus évidente au problème de la synchronisation des données provenant d'une pluralité de dispositifs consiste à synchroniser toutes les horloges. Chaque dispositif attribue une « date » aux données qu'il enregistre et, comme les horloges sont synchronisées entre elles, toutes les dates peuvent être directement comparées. Dans ce contexte, le problème de déterminer une correspondance entre les temps locaux ne se pose pas, car tous ces temps coïncident sensiblement.

La synchronisation des horloges peut être effectuée de façon matérielle ou logicielle : une introduction générale à ces techniques est fournie dans l'article de J.A. Fonseca et P. Fonseca « An overview of clock synchronization solutions », 4th IFAC International Symposium, Sicica, Argentina, 2000.

Les solutions matérielles sont basées sur l'utilisation d'un signal d'horloge externe, commun à tous les dispositifs. De cette façon on peut obtenir une précision très élevée, par exemple par l'utilisation d'une horloge atomique, telle que celle du système GPS. Par contre, ces solutions présentent l'inconvénient de demander un matériel dédié : il n'est pas possible de brancher au réseau des dispositifs qui ne sont pas conçus pour utiliser un signal d'horloge externe.

Les solutions logicielles comportent l'utilisation d'horloges logicielles (variables stockées en mémoire) pilotées par l'horloge « matérielle » de chaque dispositif connecté au réseau. Ces horloges logicielles sont synchronisées, de manière à indiquer approximativement le même temps à tout instant. Parmi ces solutions, on peut encore distinguer deux classes :

- soit on effectue une seule synchronisation au début de la session d'utilisation du réseau, et on suppose de pouvoir négliger les dérives des horloges ;
- soit on effectue également des resynchronisations en cours d'utilisation ; il s'agit de la technique adoptée, par exemple, par le protocole NTP (Network Time Protocol).

En ce qui concerne la première classe de solutions, l'hypothèse de dérives négligeables est difficilement vérifiée, du moins pour des durées d'acquisition de plusieurs heures et lorsqu'on utilise des ordinateurs du commerce : les horloges de ces derniers présentent des dérives qui peuvent atteindre les 300 $\mu$s/s, soit plus d'une seconde par heure. Remplacer ces horloges par des composantes de meilleure qualité revient à une solution matérielle, coûteuse et peu flexible.

La seconde classe de solutions présente une difficulté liée à la monotonie des horloges. Si, par exemple, une horloge a pris de l'avance par rapport au temps de référence, elle sera ramenée en arrière lors de la resynchronisation. Si une première donnée à été enregistrée immédiatement avant l'instant de resynchronisation et une deuxième donnée immédiatement après, la date du deuxième enregistrement est antérieure à celle du premier et l'ordre temporel des données se trouve inversé. De plus, les algorithmes connus qui imposent la conservation de la monotonie du temps présentent une convergence relativement lente.

En tout cas, baser la synchronisation des données sur la synchronisation des horloges ou sur l'utilisation d'une horloge unique pose des limites aux possibilités de reconfiguration du réseau de dispositifs. Voici un exemple concret d'un cas où les techniques connues de l'art antérieur montrent leurs limites. Considérons deux machines, X et Y, connectées à un même réseau et dont les horloges sont maintenues synchrones par une méthode matérielle ou logicielle. A un moment donné, la machine Y est coupée du réseau, volontairement ou à cause d'un problème de connexion, mais continue à enregistrer des données ; enfin la machine Y est reconnectée au bout d'un certain temps. On comprend facilement qu'il n'est pas possible d'ordonner chronologiquement les données acquises pendant la période de déconnexion, car la synchronisation entre les horloges des machines X et Y est irrémédiablement perdue. Pour cette raison, ces procédés de synchronisation sont très sensibles à d'éventuels problèmes de connexion au réseau. De plus, si pendant la période de déconnexion la machine Y avait été reliée à un deuxième réseau comprenant également une machine Z, il n'y aurait aucun moyen de synchroniser les données enregistrées par X avec celles enregistrées par Z. La reconnexion de la machine Y est également problématique, notamment si l'on veut conserver la monotonie de son horloge. Pour cette raison, ces procédés connus de synchronisation posent des limites aux possibilités de reconfiguration « à chaud » (pendant le fonctionnement) des réseaux auxquels ils sont appliqués.

Il est également connu de l'art antérieur d'utiliser des marquages temporels pour établir une correspondance approximative entre les temps locaux de dispositifs dont les horloges internes ne sont pas synchronisées. Dans ce cas, la synchronisation des données se fait le plus souvent a posteriori, c'est à dire après la fin de la session d'enregistrement, et pour cette raison on parle parfois de « resynchronisation » des données.

Un tel cas se présente fréquemment dans le domaine du multimédia, où il est par exemple nécessaire de synchroniser des images, acquises par une caméra numérique, avec des sons, acquis par un microphone externe. Dans le domaine du multimédia, les exigences en termes de précision sont cependant assez modestes, des erreurs jusqu'à environ 33 millisecondes (ms) étant indétectables par les êtres humains. Plusieurs techniques de synchronisation des données utilisées dans les applications multimédia sont décrites dans l'article de G. Blakowski et R. Steinmetz, "A media synchronization survey : reference model, specification, and case studies", IEEE J. Selected Areas Commun. 141 (1996), pages 5 - 35.

Ces techniques sont robustes et permettent une grande flexibilité, mais leur précision est très limitée et insuffisante pour de nombreuses applications. De plus, il n'est pas possible de déterminer avec certitude une limite supérieure de l'amplitude des erreurs de synchronisation commises.

Un objet de la présente invention est un procédé pour établir une correspondance entre les temps locaux de deux ou plusieurs machines dont les horloges ne sont pas synchronisées.

Un autre objet de la présente invention est un tel procédé, avec une précision améliorée par rapport à l'art antérieur.

Encore un autre objet de la présente invention est un tel procédé, avec une précision connue et modélisée par un intervalle.

Encore un autre objet de la présente invention est un tel procédé, qui soit robuste face à des problèmes de connexion du réseau auquel sont connectées les machines dont on veut mettre en correspondance les temps locaux.

Encore un autre objet de la présente invention est un tel procédé, qui permette une reconfiguration dynamique d'un tel réseau.

Encore un autre objet de la présente invention est un tel procédé, qui permette d'utiliser uniquement du matériel standard.

La présente invention a également pour objet un procédé de synchronisation des données enregistrées par deux ou plusieurs machines, ou engendrées par deux ou plusieurs dispositifs, qui ne demande pas de synchronisation des horloges desdits dispositifs ou machines, et qui se base sur l'établissement une correspondance entre les temps locaux de deux ou plusieurs machines dont les horloges ne sont pas synchronisées.

D'autres objets de la présente invention consistent à fournir un tel procédé avec une précision améliorée par rapport à l'art antérieur, avec une précision connue, qui soit robuste face à des problèmes de connexion du réseau auquel sont connectées les machines dont on veut mettre en correspondance les temps locaux, et/ou qui permette d'utiliser uniquement du matériel standard.

Au moins un des objets précités est atteint à l'aide d'un procédé pour établir une correspondance par intervalles entre le temps indiqué par une première horloge monotone et le temps indiqué par une deuxième horloge, également monotone, caractérisé en ce qu'il met en oeuvre, sur au moins une plage temporelle, une première référence temporelle commune à la première et à la deuxième horloge et monotone sur ladite plage, et en ce que ledit procédé comporte les étapes suivantes :

a) détermination d'un premier intervalle temporel délimité par un premier couple de valeurs du temps de la première horloge et appartenant à une première plage temporelle sur laquelle existe ladite première référence temporelle commune à la première et à la deuxième horloge ;

b) détermination d'un deuxième intervalle temporel délimité par un deuxième couple de valeurs du temps de la première horloge et appartenant à une deuxième plage temporelle sur laquelle existe ladite première référence temporelle commune à la première et à la deuxième horloge ;

c) détermination, à l'aide de la référence temporelle commune, d'un troisième intervalle temporel, délimité par un premier couple de valeurs du temps de la deuxième horloge, et contenant le premier intervalle temporel ;

d) détermination, à l'aide de la référence temporelle commune, d'un quatrième intervalle temporel, délimité par un deuxième couple de valeurs du temps de la deuxième horloge, et contenant ledit deuxième intervalle temporel ;

e) pour un cinquième intervalle temporel quelconque délimité par un troisième couple de valeurs du temps de la première horloge, calcul d'un sixième intervalle temporel, délimité par un troisième couple de valeurs du temps de la deuxième horloge et contenant ledit cinquième intervalle temporel, le calcul étant effectué par interpolation ou extrapolation à l'aide desdits premier, deuxième, troisième et quatrième intervalles.

Dans un mode particulier de réalisation de l'invention, l'étape c) comporte les opérations suivantes :

c1) détermination d'un septième et d'un huitième intervalle temporel, délimités par un quatrième et cinquième couple de valeurs du temps de la deuxième horloge respectivement et appartenant à la première plage temporelle, tels que ledit premier intervalle temporel est compris entre lesdits septième et huitième intervalles temporels;

c2) détermination d'une première, deuxième et troisième valeur de la première référence temporelle commune, comprises dans lesdits premier, septième et huitième intervalles temporels respectivement ;

c3) calcul par interpolation dudit troisième intervalle temporel, à l'aide desdits premier, septième et huitième intervalles temporels et desdites première, deuxième et troisième valeurs de la première référence temporelle commune ;

et l'étape d) comporte les opérations suivantes :

d1) détermination d'un neuvième et d'un dixième intervalle temporel, délimités par un sixième et septième couple de valeurs du temps de la deuxième horloge respectivement et appartenant à la deuxième plage temporelle, tels que ledit deuxième intervalle temporel est compris entre lesdits neuvième et dixième intervalles ;

d2) détermination d'une quatrième, cinquième et sixième valeur de la première référence temporelle commune, comprises dans lesdits deuxième, neuvième et dixième intervalles temporels respectivement ;

d3) calcul par interpolation dudit quatrième intervalle temporel, à l'aide desdits deuxième, neuvième et dixième intervalles temporels et desdites quatrième, cinquième et sixième valeurs de la première référence temporelle commune.

De préférence, l'opération c3) est effectuée en remplaçant lesdites première, deuxième et troisième valeurs de la référence temporelle commune par des intervalles temporels dont la largeur est égale à la discrétisation de la première référence temporelle commune sur la première plage temporelle, et l'opération d3) est effectuée en remplaçant lesdites quatrième, cinquième et sixième valeurs de la référence temporelle commune par des intervalles temporels dont la largeur est égale à la discrétisation de la première référence temporelle commune sur la deuxième plage temporelle.

Avantageusement, pendant la ou les plages temporelles sur lesquelles existe une première référence temporelle commune, on enregistre à plusieurs reprises une première lecture de la première horloge, suivie par une lecture de la première référence temporelle commune et ensuite par une deuxième lecture de la première horloge, et de manière indépendante on enregistre, également à plusieurs reprises, une première lecture de la deuxième horloge, suivie par une lecture de la première référence temporelle commune et ensuite par une deuxième lecture de la deuxième horloge, et les opérations c1), c2), c3), d1), d2) et d3) sont effectuées à l'aide de ces enregistrements.

Dans un autre mode particulier de réalisation de l'invention l'étape c) comporte les opérations suivantes :

c1) détermination d'une septième et d'une huitième valeur du temps de la deuxième horloge appartenant à la première plage temporelle, tels que ledit premier intervalle temporel est compris entre lesdits septième et huitième valeurs;

c2) détermination d'une première, deuxième et troisième intervalle de valeurs de la première référence temporelle commune, comprenant ledit premier intervalle temporel et lesdites septième et huitième valeurs du temps de la deuxième horloge respectivement;

c3) calcul par interpolation dudit troisième intervalle temporel, à l'aide dudit premier intervalle de valeurs du temps de la première horloge, desdites septième et huitième valeurs du temps de la deuxième horloge et desdits premier, deuxième et troisième intervalles de valeurs de la première référence temporelle commune ;

et l'étape d) comporte les opérations suivantes:

d1) détermination d'une neuvième et d'une dixième valeurs du temps de la deuxième horloge appartenant à la deuxième plage temporelle, tels que ledit deuxième intervalle temporel est compris entre lesdites neuvième et dixième valeurs ;

d2) détermination d'un quatrième, cinquième et sixième intervalle de valeur de la première référence temporelle commune, comprenant ledit deuxième intervalle temporel et lesdites neuvième et dixième valeurs du temps de la deuxième horloge;

d3) calcul par interpolation dudit quatrième intervalle temporel, à l'aide dudit deuxième intervalle de valeurs du temps de la première horloge, desdites neuvième et dixième valeurs du temps de la deuxième horloge et desdits quatrième, cinquième et sixième intervalles de valeurs de la première référence temporelle commune.

De préférence, les opérations c3) et d3) sont effectuées en remplaçant lesdites septième, huitième, neuvième et dixième valeurs du temps de la deuxième horloge par des intervalles temporels dont la largeur est égale à la discrétisation du temps de la deuxième horloge.

Avantageusement, pendant la ou les plages temporelles sur lesquelles existe une première référence temporelle commune, on enregistre à plusieurs reprises une première lecture de la première référence temporelle commune, suivie par une lecture de la première horloge et ensuite par une deuxième lecture de la première référence temporelle commune, et de manière indépendante on enregistre, également à plusieurs reprises, une première lecture de la première référence temporelle commune, suivie par une lecture de la de la deuxième horloge (et ensuite par une deuxième lecture de la première référence temporelle commune, et les opérations c1), c2), c3), d1), d2) et d3) sont effectuées à l'aide de ces enregistrements.

Dans des modes particuliers de réalisation de l'invention, les calculs par interpolation ou extrapolation mentionnés ci-dessus sont plus précisément des interpolations ou extrapolations linéaires, ou linéaires par intervalles.

Avantageusement, lorsque la première référence temporelle commune à la première et à la deuxième horloge existe sur au moins deux plages temporelles distinctes et peut comporter une rupture de monotonie d'une plage temporelle à l'autre, une deuxième référence temporelle commune monotone est utilisée afin de résoudre les ambiguïtés qui résultent de la non-monotonie de la première référence temporelle commune.

L'invention porte également sur un procédé de synchronisation des données enregistrées et datées par une première machine, ayant une première horloge, par rapport au temps local d'une deuxième machine, ayant une deuxième horloge, caractérisé en ce que la datation s'effectue en associant à chaque donnée enregistrée par la première machine un cinquième intervalle temporel, délimité par un troisième couple de valeurs du temps de la première horloge, et en ce que la synchronisation s'effectue en déterminant, par un procédé tel que décrit ci-dessus, un sixième intervalle temporel, délimité par un troisième couple de valeurs du temps de la deuxième horloge et contenant ledit cinquième intervalle temporel.

Dans un mode particulier de réalisation d'un tel procédé de synchronisation des données, la première référence temporelle commune est fournie par l'horloge d'un bus synchrone qui relie au moins temporairement lesdites première et deuxième machine.

Dans un mode particulier de réalisation de l'invention, un tel procédé de synchronisation des données se décompose en un premier sous-procédé d'enregistrement de lectures d'horloges tel que décrit plus haut, effectué localement par chaque machine dont on veut pouvoir synchroniser les données, et un deuxième procédé de synchronisation proprement dite, effectué par une seule machine vers laquelle toutes les données ont été transférées après la fin de la session d'enregistrement des données.

D'autres caractéristiques, détails et avantages de l'invention ressortiront à la lecture de la description faite en référence aux dessins annexés, donnés à titre d'exemple et dans lesquels :

Les figures 1A et 1B illustrent comment on peut procéder à la détermination d'une correspondance entre les temps indiqués par deux horloges distinctes et non synchronisées;

les figures 2, 3A - 3L, 4 et 5, ainsi que les tableaux Tab.A, Tab.B et Tab.C, illustrent par un exemple concret un procédé constituant un mode de réalisation de l'invention; et

la figure 6 montre un organigramme de ce procédé.

Avant de procéder à la description des dessins, il est opportun de définir précisément certains des termes et des notations utilisées dans la suite.

Par « vrai temps » on entend le temps physique, qui ne peut pas être connu précisément et dont les horloges ne donnent qu'une approximation ; dans ce document, *« t »* indique une valeur du vrai temps.

Par « horloge » on entend une horloge numérique, constituée par un oscillateur couplé à un compteur. A chaque cycle de l'oscillateur, le compteur est incrémenté d'une quantité discrète $\delta$ (discrétisation). Par conséquent, le diagramme du temps mesuré par une horloge par rapport au vrai temps a une forme en escalier, avec des marches de hauteur $\delta$. Le compteur d'une horloge a nécessairement une capacité finie et est remis à zéro quand un dépassement se produit. Des horloges peuvent néanmoins avoir une capacité suffisamment grande pour que ce problème soit négligé.

Un « bus synchrone » est un bus sur lequel est diffusé un signal d'horloge.

Par « temps local » d'une machine on entend le temps mesuré par l'horloge de cette machine. Une valeur du temps local est indiquée par « T ».

Par « date » d'une donnée enregistrée par une machine on entend soit le temps lu sur l'horloge de la machine à l'instant de l'enregistrement de la donnée, soit l'intervalle compris entre deux lectures de cette horloge, effectuées avant et après ledit enregistrement. Toute ambiguïté sera levée par le contexte et par la notation: ainsi, la date indiquée par « [T] » est en fait l'intervalle compris entre $\underline{T}$ et $\overline{T}$ ,avec $\underline{T} < \overline{T}$. En réalité, toute date peut être considérée comme un intervalle : même si on sait avec certitude quelle était la valeur indiquée par l'horloge de la machine au moment de l'enregistrement d'une donnée, il reste une indétermination $\delta$ due à la discrétisation de ladite horloge.

Par « monotonie » on entend la propriété d'une horloge telle que, si $t_1 < t_2$, $T(t_1) < T(t_2)$.

Par « décalage » (offset) on entend la différence entre le temps indiqué par deux horloges à un instant donné, ou entre le temps d'une horloge et le vrai temps. Le décalage entre deux temps définis à l'aide d'intervalles est aussi un intervalle: soit $[T_A] = [\underline{T}_A , \overline{T}A]$ et $[T_B] = [\underline{T}_B , \overline{T}_B]$, alors le décalage permettant de passer de $[T_B]$ à $[T_A]$ vaut :

$$[\text{off}_{AB}] = [\underline{\text{off}_{AB}} , \overline{\text{off}_{AB}}] = [\underline{T}_A - \overline{T}_B , \overline{T}_A - \underline{T}_B] \qquad (1)$$

tel que $[T_A] = [T_B] + [\text{off}_{AB}]$.

Par « dérive » (drift) entre deux horloges, ou une horloge et le vrai temps, on entend la dérivée du décalage par rapport au temps local d'une des horloges ou du vrai temps. Sauf indication contraire dans ce document on considère que, pour chaque couple d'horloges, la dérive est constante dans le temps et que, par conséquent, le décalage est une fonction linéaire par rapport au temps (hypothèse de dérives linéaires). Dans ce cas, la dérive peut être calculée en connaissant deux décalages déterminés à des dates différentes. Si les décalages et/ou les dates sont des intervalles, la dérive aussi en est un :

$$[\text{drift}_{AB}] = [\underline{\text{drift}_{AB}} , \overline{\text{drift}_{AB}}] = \frac{\left[ off^{\,2}_{\,AB} \right] - \left[ off^{\,1}_{\,AB} \right]}{\left[ T^{\,2}_{B} \right] - \left[ T^{\,1}_{B} \right]} \qquad (2)$$

au sens du calcul par intervalles.

Les exposants 1 et 2 se réfèrent à la première et à la deuxième date à la quelle un décalage est déterminé.

Par « synchronisation par intervalles des données de la machine B par rapport à la machine A » on entend la détermination, pour chaque donnée enregistrée par la machine B avec une date $[T_B]$, d'un intervalle $[T_{AB}]$ du temps local de la machine A tel que $\underline{T}_{AB}$ précède l'enregistrement de ladite donnée et $\overline{T}_{AB}$ le suit. Dans un souci de concision on dit que $[TA_B]$ est le temps local de la machine A qui « correspond » à $[T_B]$. On observe que le rôle des deux machines n'est pas symétrique et qu'en général l'intervalle $[T_{AB}]$ est plus large que $[T_B]$.

Dans la suite, lorsque le contexte ne se prête pas à des ambiguïtés, l'expression « synchronisation par intervalles » est remplacée par « synchronisation » tout simplement.

Par « resynchronisation » on entend plus spécifiquement une synchronisation effectuée après que toutes les données aient été enregistrées.

La « précision » d'une synchronisation par intervalles est déterminée par l'élargissement de $[T_{AB}]$ par rapport $[T_B]$.

La « précision » d'un procédé de synchronisation qui se propose d'établir une relation entre des valeurs ponctuelles de $T_A$ et $T_B$ est la différence entre la valeur calculée de $T_{AB}$ et sa valeur « vraie ».

Les techniques de calcul par intervalles sont exposées dans l'ouvrage « Applied Interval Analysis », L. Jaulin, M. Kieffer, O. Dirit et E. Walter, Springer-Verlag, 2001, ISBN : 1-85233-219-0.

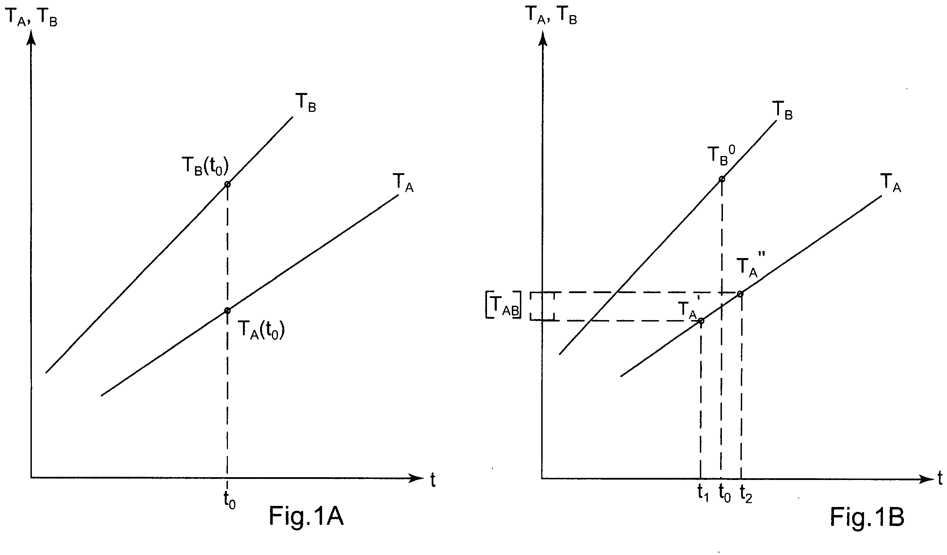

Les figures 1A et 1 B illustrent comment on peut procéder à la détermination de la correspondance entre les temps $T_A$ et $T_B$ indiqués par deux horloges A et B. Dans un souci de simplicité, la discrétisation des horloges a été négligée ($\delta \to 0$) et donc les lignes $T_A(t)$ et $T_B(t)$, qui ont en réalité une forme en escalier, ont été approchées par des droites.

La première possibilité, qui vient immédiatement à l'esprit, consiste simplement à lire « simultanément » les deux horloges à un instant $t_0$ pour trouver une correspondance entre $T_A(t_0)$ à et $T_B(t_0)$. En fait, cette lecture « simultanée » n'est pas possible dans le cas de machines réelles ; de plus, chaque lecture demande un temps fini, qui ne peut pas être prédéterminé et qui dépend des temps de transmission des données sur des lignes ou bus, ainsi que des latences des processeurs et des systèmes d'exploitation. Si les exigences de précision de la synchronisation sont relativement modestes, comme dans le cas des applications multimédia, l'imprécision sur le temps nécessaire à effectuer la double lecture peut être inférieure à la marge d'erreur admise. Il est donc licite d'ignorer le problème et considérer que les deux lectures sont effectuées sensiblement en même temps.

Cette hypothèse n'est pas justifiée si une précision plus élevée est requise. Comme il n'est pas possible d'établir une correspondance biunivoque $T_A \leftrightarrow T_B$, on est donc amené à adopter une approche « par intervalles », comme expliqué plus haut. Un avantage majeur de cette approche par rapport à toute technique essayant de déterminer une équivalence approximative entre dates « ponctuelles » est qu'elle permet de connaître exactement l'incertitude de la synchronisation, qui est égale à la largeur de l'intervalle.

Comme illustré sur la figure 1B, pour déterminer une correspondance par intervalles entre les temps locaux des machines A et B, d'abord, à un instant $t_1$, on lit le temps local de la machine A, $T'_A$, ensuite, à un instant $t_0$, celui de la machine B, $T_B$, et enfin, à un instant $t_2$, à nouveau celui la machine A, $T''_A$ (il ne faut pas oublier que les valeurs exactes de $t_0$, $t_1$ et $t_2$ ne peuvent pas être connues). On comprend aisément qu'il faut vérifier qu'aucune rupture de monotonie du temps local de la machine A n'ait lieu entre la première et la dernière lecture.

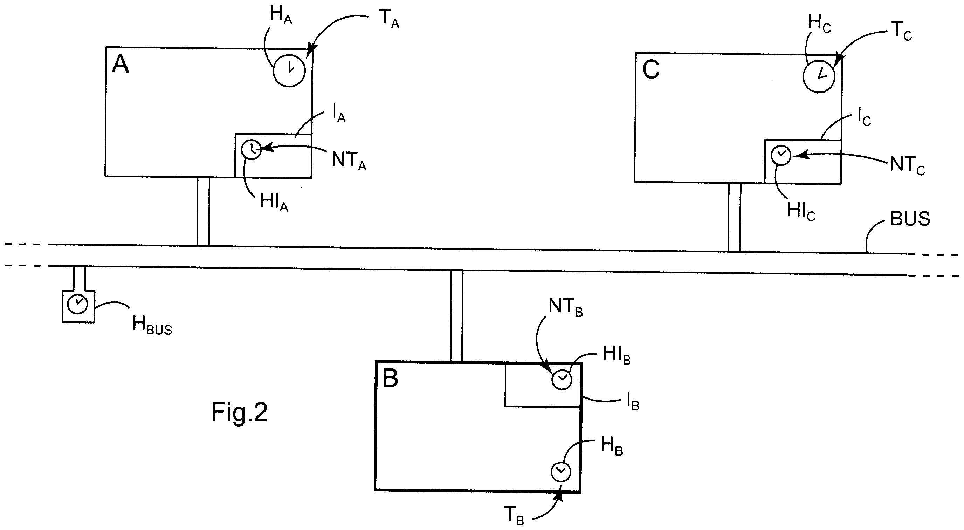

Un exemple d'un procédé selon l'invention pour déterminer une correspondance entre les temps indiqués par des horloges distinctes et synchroniser ainsi des données est maintenant décrit en détail à l'aide des figures 2, 3A - 3L, 4 et 5, ainsi que des tableaux Tab.A, Tab.B et Tab.C. Pour l'instant on se limite à considérer une synchronisation « a posteriori » (resynchronisation), c'est-à-dire que les données sont synchronisées après la fin de la session de fonctionnement du système (appelée également « session d'acquisition des données » par la suite). Le cas de la synchronisation « en temps réel » (pendant la session de fonctionnement du système) sera considéré plus loin.

Un système informatique, représenté sur la figure 2, comprend trois machines, A, B et C, telles que des ordinateurs, chacune ayant une horloge interne $H_A$, $H_B$ et $H_C$ qui mesure un temps local $T_A(t)$, $T_B(t)$ et $T_C(t)$ respectivement, ainsi qu'un bus synchrone BUS, tel qu'un bus FireWire® (IEEE 1394) ayant une horloge propre $H_{BUS}$ présentant une précision meilleure que $3\mu s$ dans le cas le plus défavorable selon la norme IEEE1394a.

Les machines peuvent se connecter et se déconnecter du bus BUS indépendamment les unes des autres ; à chaque fois qu'une reconfiguration du système se produit (par exemple, à chaque fois qu'une machine se connecte ou se déconnecte), un signal d'interruption est transmis sur le bus. Une des machines connectées au réseau est nommée « machine de référence » est son nom est connu par les autres machines ; dans la figure il s'agit de la machine B, caractérisé par un contour en trait épais. La machine de référence ne peut pas être considérée comme une machine « maître » dans un système centralisé : n'importe quelle machine du réseau peut être choisie pour assumer temporairement cette fonction. En effet, une nouvelle machine de référence est choisie de manière aléatoire à chaque interruption, ce qui permet d'assurer le fonctionnement du système même en cas de déconnexion de l'ancienne machine de référence.

Chaque machine est également équipée d'une interface de bus $I_A$, $I_B$ et $I_C$, comportant une horloge, $HI_A$, $HI_B$ et $HI_C$ respectivement. pilotée par $H_{BUS}$. L'horloge du bus $H_{BUS}$ est produite par l'une des interfaces (appelée « Cycle Master » dans la norme IEEE FireWire). Les horloges HI sont asservies sur $H_{BUS}$.

L'horloge du bus $H_{BUS}$ a un compteur de capacité limitée, qui est remis à zéro toutes les 128 s, mais les horloges des interfaces comportent une extension logicielle ayant une capacité suffisamment grande pour que des dépassements ne se produisent pas pendant la durée de fonctionnement du système. Le temps mesuré par l'horloge de l'interface $HI_A$, $HI_B$ et $HI_C$ (« temps d'interface ») de la machine A, B et C est indiqué par $NT_A(t)$, $NT_B(t)$ et $NT_C(t)$ respectivement.

Une des machines est choisie pour « donner le temps du réseau » : cela signifie que les horloges d'interface de toutes les autres machines sont synchronisées sur la sienne. A chaque interruption, une nouvelle machine est choisie pour cette tache et l'extension logicielle des horloges d'interface est remise à zéro : après l'interruption, toutes les horloges indiquent donc le même temps que l'horloge du bus $H_{BUS}$.

Il faut noter que la machine qui donne le temps du réseau n'est pas nécessairement la machine de référence. Si une machine est déconnectée du réseau, elle est sa propre machine de référence et son temps du réseau est le temps de sa propre horloge d'interface.

On comprend que le temps NT du réseau constitue une première référence temporelle commune à toutes les machines reliées au bus BUS, mais non monotone. Le temps de la machine de référence constitue une deuxième référence temporelle commune à toutes les machines reliées au bus BUS et, en plus, monotone. Cette deuxième référence temporelle est néanmoins très imprécise car, pour la connaître, une machine autre que celle de référence doit effectuer une requête par l'intermédiaire du bus, ce qui demande un temps relativement important et non déterminable a priori.

Tout au long de son fonctionnement, chaque machine enregistre, indépendamment des autres, des données et leur date sous forme d'intervalle, par exemple des acquisitions de capteurs.

En même temps, chaque machine construit un fichier dit « horodateur », qui est constitué par une suite de lignes. Les lignes sont remplies à intervalles approximativement réguliers, par exemple d'une seconde environ, et elles comprennent cinq champs :

TL1 est une première lecture du temps local de la machine ;
TR est une lecture du temps du réseau ;
TL2 est une deuxième lecture du temps local de la machine ;

NMR est le nom de la machine de référence ; et

TMR est le temps local de la machine de référence.

Les trois premières lectures doivent être effectuées dans l'ordre, de telle sorte que TR soit compris entre TL1 et TL2.

Quand un signal d'interruption est reçu, la machine remplit une « ligne d'exception » en attribuant aux champs TL1, TR, TL2 et TMR la valeur 0 et au champ NMR le nom conventionnel « BUS_RESET ».

Le remplissage des fichiers horodateurs est un processus de basse priorité et peu onéreux, qui n'interfère pas sensiblement avec l'enregistrement et la datation des évènements.

Une fois la session terminée, les fichiers horodateurs sont transférés à un même ordinateur et une sous-procédure de resynchronisation proprement dite peut être démarrée.

On se pose, par exemple, le problème spécifique de resynchroniser les données enregistrées par les machines A et B.

Les tableaux Tab.A, Tab.B et Tab.C montrent une partie du contenu des fichiers horodateurs des machines A, B et C respectivement, appelés par la suite FHA, FHB et FHC respectivement. Seulement les deux lignes qui précèdent et suivent chaque interruption sont représentées ; de plus, dans un souci de clarté et de gain de place, le champ TL2 ne contient pas la valeur de la deuxième lecture du temps local de la machine, mais la différence entre la deuxième et la première lecture, ce qui est clairement équivalent. Les temps indiqués sont en microsecondes (μs), mais cela n'est pas essentiel à la compréhension du procédé.

Les interruptions subdivisent chaque fichier en sections $\alpha 1$ - $\alpha 8$, $\beta 1$ - $\beta 9$ et $\gamma 1$ - $\gamma 9$, séparées par des lignes d'exception. Il est important d'observer qu'il y a une interruption à chaque rupture de monotonie, donc on peut considérer que le temps du réseau est en fait « localement » monotone sur chaque section.

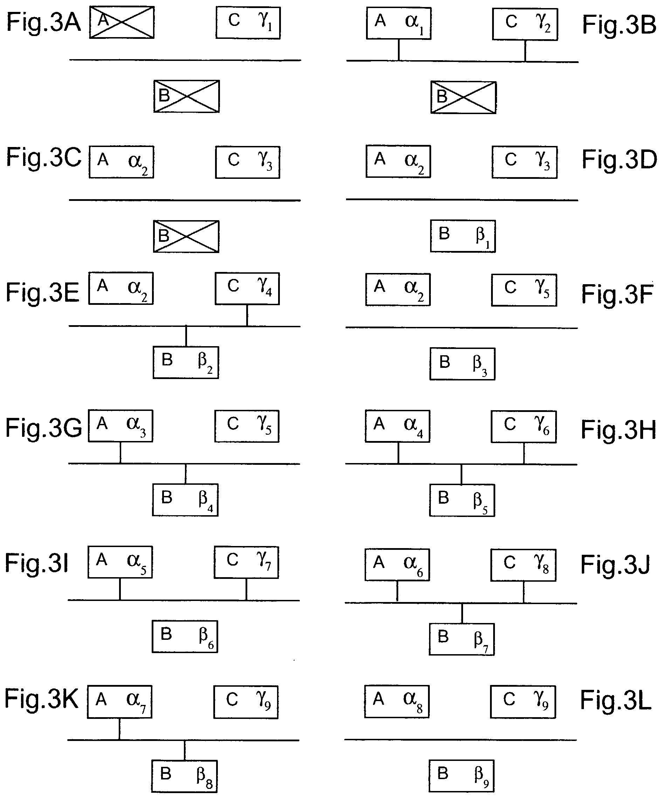

Les champs NMR et TMR permettent de déterminer une correspondance temporelle entre les sections des différents fichiers. Par exemple, on voit que les sections $\alpha 1$ et $\gamma 2$ ont été enregistrées simultanément, pendant que les machines A et C étaient toutes deux reliées au bus BUS, avec la machine A comme machine de référence. De cette façon on peut reconstituer l' « histoire » du système, comme illustré sur les figures 3A - 3L.

Initialement (fig. 3A) seulement la machine C est en fonction et elle remplit la section $\gamma 1$ de son fichier horodateur.

Ensuite, (fig. 3B), la machine A se met en fonction et les deux machines se connectent au bus pendant un certain temps (sections $\alpha 1$ et $\gamma 2$), A étant la machine de référence.

Puis, figure 3C, elles se séparent à nouveau (sections $\alpha 2$ et $\gamma 3$).

Pendant ce temps (fig. 3D) la machine B se met en fonction, mais reste déconnectée du réseau (section $\beta 1$), donc ne produit pas d'interruption.

Pendant la cinquième période (figure 3E, sections $\alpha 2$, $\beta 2$ et $\gamma 4$) les machines B et C sont connectées au bus, et C est la machine de référence. La machine A ne reçoit pas le signal d'interruption provoqué par la connexion de la machine B, donc elle continue à remplir la section $\alpha 2$ de son fichier horodateur.

Lors de la sixième période, figure 3F, les trois machines sont déconnectées du bus et remplissent les sections $\alpha 2$, $\beta 3$ et $\gamma 5$ des fichiers horodateurs respectifs (la machine A, qui était déjà déconnectée ne reçoit pas le signal d'interruption provoqué par la déconnexion de B et C).

Figure 3G, les machines A et B se branchent à nouveau sur le bus, avec A comme machine de référence, et passent ainsi aux sections $\alpha 3$ et $\beta 4$, alors que la machine C reste déconnectée et, ne recevant pas de signal d'interruption, continue à remplir la section $\gamma 5$.

Ensuite, figure 3H, les trois machines se retrouvent connectées au bus (sections $\alpha 4$, $\beta 5$ et $\gamma 6$), avec B comme machine de référence.

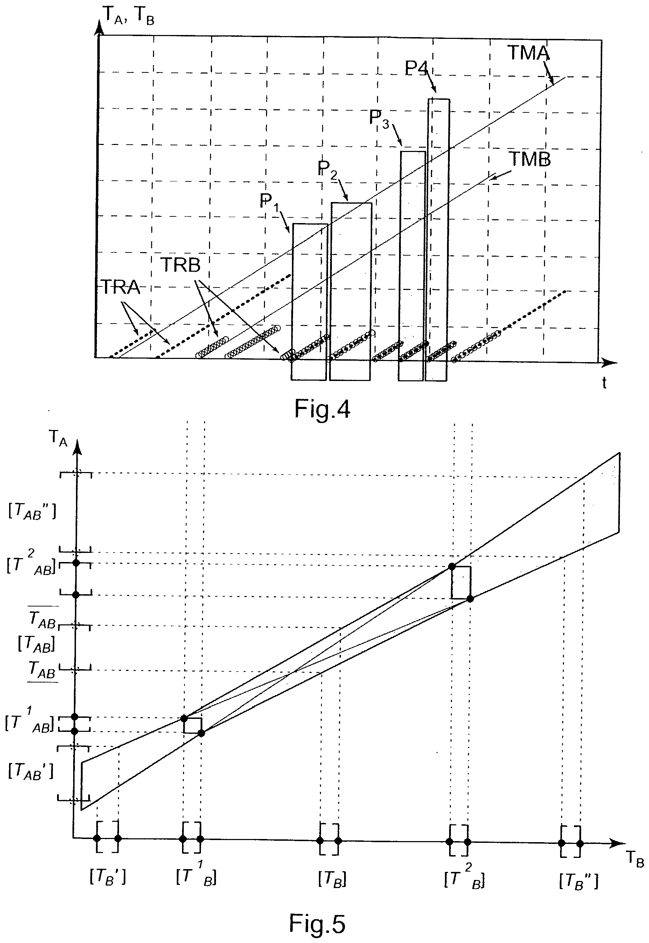

Quand cette dernière (B) se déconnecte (figure 31, sections $\alpha 5$, $\beta 6$ et $\gamma 7$), A devient la machine de référence. Peu après (figure 4J, sections $\alpha 6$, $\beta 7$ et $\gamma 8$) B se reconnecte et redevient machine de référence.

Figure 3K, la machine C se déconnecte (sections $\alpha 7$, $\beta 8$ et $\gamma 9$) et A redevient machine de référence.

Enfin (figure 3L, sections $\alpha 8$ et $\beta 9$) les machines A et B se déconnectent aussi, après quoi on ne s'intéresse plus à l'évolution du système.

On a ainsi réalisé, grâce à la deuxième référence temporelle (TMR) une sorte de resynchronisation, qui est cependant très grossière car les lignes des fichiers horodateurs sont remplies à basse cadence. Cette mise en correspondance des sections $\alpha$, $\beta$ et $\gamma$ permet de pallier la non-monotonie de la première référence temporelle (NT) et de s'en servir pour effectuer la resynchronisation par intervalles proprement dite.

Dans cet exemple on a considéré le cas où un seul bus est présent.

En revenant au problème de resynchroniser les données de la machine B par rapport au temps de la machine A, il faut d'abord déterminer les « plages temporelles communes », c'est-à-dire les périodes pendant lesquelles ces deux machines se sont retrouvées connectées au même réseau par le bus BUS, qui est celui du seul réseau considéré dans l'exemple. Il y a quatre de ces plages : P1, qui correspond aux sections $\alpha 3$ et $\beta 4$ ; P2, qui correspond aux sections $\alpha 4$ et $\beta 5$ ; P3, qui correspond aux sections $\alpha 6$ et $\beta 7$ et P4, qui correspond aux sections $\alpha 7$ et $\beta 8$. Les plages P1 et P2, ainsi que P3 et P4, sont limitrophes, mais séparées par une interruption.

La figure 4 est une représentation graphique de l'information contenue dans les fichiers FHA et FHB (la discrétisation des horloges est négligée : on ne distingue pas les marches correspondant aux incréments discrets des compteurs). L'axe des ordonnées porte les temps locaux des machines A et de B et les temps des réseaux auxquels lesdites machines sont connectées, celui des abscisses le vrai temps. Les lignes TMA et TMB représentent respectivement les temps locaux de A et de B. Les lignes TRA (pointillée) et TRB (cercles) représentent les temps du réseau de A et de B respectivement. Les plages communes P1, P2, P3 et P4 sont mises en évidence par des zones ombrées.

Comme il a été expliqué plus haut, chaque donnée enregistrée par la machine B est caractérisée par une date $[T_B]$, qui est un intervalle compris entre deux lectures de l'horloge $H_B$ entourant une valeur du temps du réseau, $[NT]$. On se pose comme objectif de déterminer $[T_{AB}]$, l'intervalle du temps local de la machine A correspondant à $[T_B]$.

On considère d'abord le cas où $[T_B]=[T_B^1]$, situé à l'intérieur d'une plage temporelle commune, par exemple P1, comme illustré sur la figure 4. La première opération consiste à déterminer deux dates $[T_{A1}^1]$ et $[T_{A2}^1]$ de la machine A appartenant à la même plage et situées avant et après $[T_B^1]$. En fait, ces « dates » sont des intervalles déterminés par la méthode décrite en référence à la figure 1B et correspondants aux temps du réseau $[NT_{A1}^1]$ et $[NT_{A2}^1]$ respectivement. L'hypothèse de dérive linéaire des horloges permet de calculer $[T_{AB}^1]$ par une interpolation linéaire :

$$\left[ T_{AB}^{\ 1} \right] = \left[ T_{A1}^{\ 1} \right] + \frac{\left[ NT_B^{\ 1} \right] - \left[ NT_{A1}^{\ 1} \right]}{\left[ NT_{A2}^{\ 1} \right] - \left[ NT_{A1}^{\ 1} \right]} \left( \left[ T_{A2}^{\ 1} \right] - \left[ T_{A1}^{\ 1} \right] \right) \tag{3}$$

Comme toutes les dates sont des intervalles, le résultat est aussi un intervalle. Il est clair que l'équation (3) ne pourrait pas être utilisée si entre $[NT_{A1}^1]$ et $[NT_{A2}^1]$ s'était produite une interruption, et donc une rupture de monotonie du temps du réseau. Pour cette raison, il a été requis que $[T_{A1}^1]$ et $[T_{A2}^1]$ appartiennent à la même plage temporelle.

Le décalage (offset) entre les horloges des machines A et B à la date $[T_B]$ est simplement donné par :

$$[\text{off}_{AB}^1] = [T_{AB}^1] - [T_B^1] \tag{4}$$

S'agissant de la différence entre deux intervalles, le décalage est aussi un intervalle.

En connaissant le décalage entre les horloges à deux dates différentes, $[T_B^1]$ et $[T_B^2]$, il est possible de déterminer la dérive (drift), supposée linéaire :

$$\left[ drift_{AB} \right] = \frac{\left[ off_{AB}^{\ 2} \right] - \left[ off_{AB}^{\ 1} \right]}{\left[ T_B^{\ 2} \right] - \left[ T_B^{\ 1} \right]} \tag{5}$$

où $[\text{off}^1]$ et $[\text{off}^2]$ sont les valeurs du décalage entre les horloges $H_A$ et de $H_B$ aux dates $[T_B^1]$ et $[T_B^2]$ respectivement.

Il est important d'observer que la présence d'interruptions entre $[T_B^1]$ et $[T_B^2]$ ne constitue pas un obstacle à l'application de l'équation (5), car le temps du réseau ne figure pas directement dans cette dernière. Au contraire, l'homme du métier comprendra facilement qu'il est avantageux de maximiser l'écart entre les dates $[T_B^1]$ et $[T_B^2]$ : par conséquent on prend pour $[T_B^1]$ la première date de la plage P1 et pour $[T_B^2]$ la dernière de la plage P4.

A ce point on dispose de toute l'information nécessaire pour calculer la correspondance entre des dates lues sur les horloges $H_A$ et $H_B$, même à l'extérieur des plages communes P1 - P4. On peut en effet démontrer que :

$$\text{Si } \left[ T_B \right] \subset \left[ \underline{T_B^{\ 1}} , \overline{T_B^{\ 2}} \right],$$

alors :

$$[T_{AB}] = [\underline{T}_{AB} , \overline{T}_{AB}] \tag{6}$$

avec :

$$\underline{T}_{AB} = \underline{T}^1_{AB} + \frac{\underline{T}_B - \overline{\underline{T}^1_B}}{\underline{T}^2_B - \underline{T}^1_B}\left(\underline{T}^2_{AB} - \underline{T}^1_{AB}\right) \qquad (6.1)$$

et

$$\overline{\underline{T}_{AB}} = \overline{T}^1_{AB} + \frac{\overline{T}_B - \underline{T}^1_B}{\underline{T}^2_B - \underline{T}^1_B}\left(\overline{T^2_{AB}} - \overline{T^1_{AB}}\right) \qquad ; \qquad (6.2)$$

si $[T_B] \leq [T^1_B]$, alors :

$$\left[\, T_{AB} \,\right] = \left[\, T_B \,\right] + \left[\, T^1_B \,\right] + \left(\left[\, T_B \,\right] - \left[\, T^1_B \,\right]\right) \cdot \left[\, drift_{AB} \,\right] \; ; \; \text{et} \qquad (7)$$

si $[T_B] \geq [T^2_B]$, alors :

$$\left[\, T_{AB} \,\right] = \left[\, T_B \,\right] + \left[\, T^2_B \,\right] + \left(\left[\, T_B \,\right] - \left[\, T^2_B \,\right]\right) \cdot \left[\, drift_{AB} \,\right]. \qquad 8)$$

$[T_B] \leq [T^1_B]$ est une notation simplifiée pour $\overline{T}_B \leq \overline{T}^1_B$ et $[T_B] \geq [T^2_B]$ pour $\underline{T}_B \geq \underline{T}^2_B$ .

La figure 5 constitue une représentation graphique des équations 6 - 8. On observe que la largeur de l'intervalle $[TA_B]$, et donc l'imprécision de la synchronisation, est à peu près constante pour $\left[\, T_B \,\right] \subset \left[\, \overline{T^1_B} \,, T^2_B \,\right]$ et augmente au fur et à mesure que l'on s'éloigne de cette plage (intervalles $[T_B']$, $[T_{AB}']$ et $[T_B'']$, $[T_{AB}'']$, situés respectivement avant $[T^1_B]$ et après $[T^2_B]$). On comprend donc pourquoi il est avantageux de choisir les intervalles $[T^1_B]$ et $[T^2_B]$ les plus éloignés possibles. Sur les axes $T_A$ et $T_B$ de la figure 5, les temps connus $(\underline{T}'_B , \overline{T'_B} , \underline{T}^1_B , \overline{T^1_B} , \underline{T}^2_B , \overline{T^2_B} , \underline{T}''_B , \overline{T''_B} , \underline{T}^1_{AB} , \overline{T^1_{AB}} , \underline{T}^2_{AB}$ et $\overline{T^2_{AB}}$ ) sont indiqués par un rond plein et les temps inconnus ( $\underline{T}'_{AB} , \overline{T'_{AB}} , \underline{T}_{AB} , \overline{T}_{AB} , \underline{T}''_{AB}$ et $\overline{T''_{AB}}$ ) par un rond en pointillé.

Il est intéressant d'observer que le fichier FHC, après avoir contribué à la mise en correspondance des sections α, β et γ, n'est plus utilisé pour la resynchronisation.

On peut maintenant revenir à l'exemple, considéré plus haut, d'une reconfiguration « à chaud » d'un réseau, incompatible avec les procédés de synchronisation des données connus de l'art antérieur. Tout d'abord, on observe que la reconnexion d'une machine Y au réseau comprenant une machine X ne pose aucun problème de monotonie, car les horloges des machines ne sont jamais synchronisées entre elles. De plus, comme aussi bien la machine X que la machine Z ont été reliées au même réseau que la machine Y pendant une partie de leur histoire, toutes les données enregistrées par ces machines peuvent être resynchronisées avec celles de Y par un procédé selon l'invention. On peut donc obtenir indirectement une synchronisation des données de la machine X avec celles de la machine Y, bien qu'avec une moindre précision.

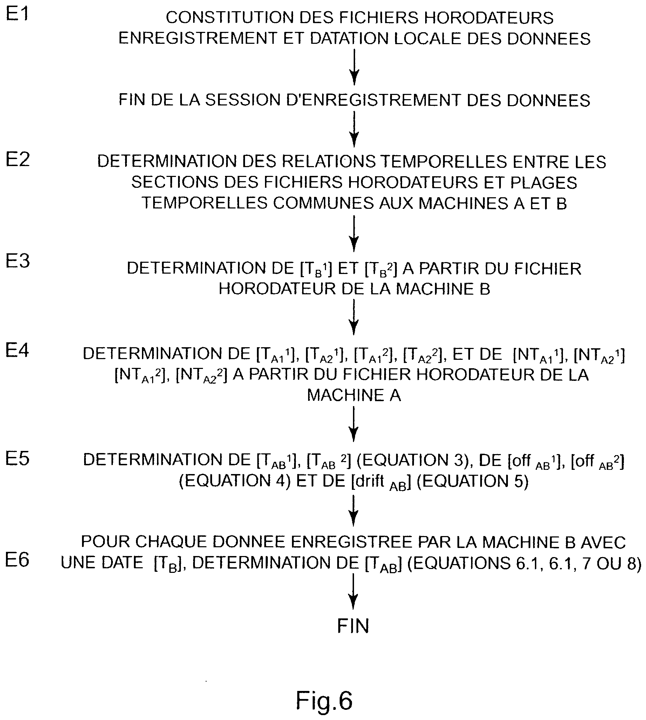

Sur la figure 6 est illustré un organigramme du procédé de resynchronisation par intervalles des données de la machine B par rapport à la machine A décrit ci-dessus. Le procédé peut être reproduit pour la synchronisation de plusieurs machines.

La première étape (E1) comporte le remplissage des fichiers horodateurs FHA et FHB des machines A et B, ainsi que de ceux de toutes les autres machines du système (C, en particulier) et, en parallèle, l'enregistrement des données datées localement. Ces opérations sont exécutées jusqu'à la fin de la session d'enregistrement des données.

La deuxième étape (E2) comporte la détermination, à l'aide des champs NMR et TMR des fichiers FHA, FHB et FHC des relations temporelles entre les différentes sections de ces fichiers, ainsi que des « plages temporelles

commune » des machines A et B, c'est-à-dire des périodes pendant lesquelles ces deux machines étaient reliées à un même réseau.

Ensuite, étape E3, on choisit deux lignes LB1 et LB2 du fichier FHB, appartenant chacune à une « plage temporelle commune ». Il n'est pas nécessaire, que ces deux lignes appartiennent à la même plage : comme discuté précédemment, il est préférable que l'écart entre ces deux lignes soit le plus grand possible. Les deux lectures du temps local de la machine B (TL1,TL2) contenues dans les lignes LB1 et LB2 définissent les intervalles [TB$^1$] et [TB$^2$].

A l'étape E4 on détermine deux lignes (LA1 et LA2) du fichier FHA appartenant à la même plage temporelle que la ligne LB1 de FHB et enregistrées respectivement avant et après cette dernière. De la même manière on détermine les lignes LA3 et LA4 qui « entourent » LB2.

Plus synthétiquement :

$$[T_{A1}{}^1] \leq [T_B{}^1] \leq [T_{A2}{}^1] \; ;$$

$$[T_{A1}{}^2] \leq [T_B{}^2] \leq [T_{A2}{}^2]$$

Il est avantageux que LA1 et LA3 soient les dernières lignes enregistrées avant LB1 et LB2, et que LA2 et LA2 soient les premières lignes enregistrées après LB1 et LB2 respectivement.

Les temps du réseau [NT$_{A1}{}^1$], [NT$_{A2}{}^1$], [NT$_{A1}{}^2$] et [NT$_{A2}{}^2$] sont définis comme correspondant au champ TR des lignes LA1 - LA4 respectivement :

$$[NT_{A1}{}^1]= TR \ ligne \ LA1$$

$$[NT_{A2}{}^1]= TR \ ligne \ LA2$$

$$[NT_{A1}{}^2]= TR \ ligne \ LA3$$

$$[NT_{A2}{}^2]= TR \ ligne \ LA4$$

La largeur de ces intervalles est donnée par la discrétisation $\delta$ du temps du réseau.

A l'étape E5 on calcule [T$_{AB}{}^1$], [T$_{AB}{}^2$], [off$_{AB}{}^1$], [off$_{AB}{}^2$] et [drift$_{AB}$] par interpolation, à l'aide des équations 3 - 5.

Enfin, à l'étape E6 on effectue la resynchronisation de toutes les données de la machine B (ou seulement d'une partie d'entre elles) par interpolation ou extrapolation, à l'aide des équations 6.1, 6.2, 7 et 8.

Un procédé de resynchronisation des données selon l'organigramme de la figure 6 a été testé expérimentalement par les inventeurs.

Lors d'une première expérience ont été utilisés deux ordinateurs basés sur un processeur INTEL® Pentium IV® avec une cadence d'horloge de 1,8 et 2 GHz respectivement et une mémoire vive de 512 Mo, équipés du système d'exploitation Microsoft® Windows 2000 Professional® et d'une interface FireWire® MindReady® avec l'API Sednet 2®, reliés entre eux et à une caméra numérique UNIBRAIN® Fire-I® par un bus de réseau FireWire®. Les ordinateurs devaient enregistrer et dater les images transmises par la caméra sur le bus de réseau ; la synchronisation était considérée obtenue si les dates des images enregistrées par les deux ordinateurs étaient constituées par des intervalles se recouvrant. La largeur des intervalles de resynchronisation ainsi obtenus ([T$_{AB}$], en reprenant la notation de l'exemple) a été de 250 - 300 $\mu$s.

Une deuxième expérience a été réalisée en suivant le même protocole, mais utilisant deux ordinateurs basés sur un processeur INTEL® Pentium III® avec une cadence d'horloge de 800 MHz et une mémoire vive de 128 et 256 Mo respectivement, équipés du système d'exploitation Linux RTAI® et d'une interface FireWire® OHCI®, reliés entre eux et à une caméra numérique UNIBRAIN® Fire-I® par un bus de réseau FireWire®. Dans ce cas, des intervalles de resynchronisation de 30 - 50 $\mu$s on été obtenus, grâce au fait que Linux RTAI® s'exécute avec un sous-noyau en temps réel, qui permet d'atteindre une discrétisation du temps de réseau de l'ordre de 5 $\mu$s, contre 130 $\mu$s avec l'utilisation de l'API Sednet 2® dans le cas de Microsoft® Windows 2000 Professional®.

La description fait en référence aux figures 3A - 6 et aux tableaux Tab.A, Tab.B et Tab.C porte sur un mode de réalisation où les fichiers horodateurs sont remplis en enregistrant deux lectures de l'horloge de chaque machine et une lecture du temps de réseau comprise entre les deux. Il est également possible, dans le cadre de l'invention, d'effectuer deux lectures du temps de réseau et une lecture du temps local de chaque machine, comprise entre les deux : l'algorithme de la figure 6 s'applique mutatis mutandis.

De nombreuses autres variantes et améliorations du procédé sont possibles, sans sortir du cadre de la présente invention.

Par exemple, la détermination d'un décalage $[off_{AB}^1]$ (équation 4) demande l'utilisation d'un couple de lectures du temps du réseau, $[NT_{A1}^1]$ et $[NT_{A2}^1]$. En fait, n'importe quel couple entourant $[T_B]$ peut être choisi, et le résultat est toujours un intervalle $[off_{AB}^1]$ contenant avec certitude la « vraie » valeur $off_{AB}^1$ vrai du décalage (impossible à connaître). Si, à partir d'une pluralité de tels couples, on détermine une pluralité d'intervalles $[off_{AB}^1]'$. $[off_{AB}^1]''$,etc., on sait avec certitude que $off_{AB}^1{}_{vrai} \in [off_{AB}^1]' \cap [off_{AB}^1]''$ n... On obtient de telle sorte un intervalle plus étroit, donc une précision améliorée. On peut réduire de la même façon la largeur des intervalles qui représentent la dérive et les différentes dates $T_{AB}$. Les principes de cette méthode, dite de « propagation de contraintes sur les intervalles » sont exposés dans l'article de L. Jaulin, M. Kieffer, O. Dirit et E. Walter cité plus haut. En effet, la méthode de propagation des contraintes à permis d'obtenir une réduction la largeur d'intervalle de l'ordre de 20% - 40% pour le décalage ($[off_{AB}]$), et de l'ordre de 20% pour la dérive ($[drift_{AB}]$).

Une autre amélioration consiste à relâcher l'hypothèse de dérives linéaires, qui peut être remplacée par une hypothèse de linéarité par intervalles sans modifications notables de l'algorithme.

Encore une autre variante consiste à effectuer la synchronisation des données pendant la session de fonctionnement du réseau : à intervalles réguliers, la synchronisation est effectuée en utilisant les informations disponibles, tout en continuant à acquérir des données et à ajouter des lignes aux fichiers horodateurs des différentes machines. Après chaque étape de synchronisation, on effectue l'intersection des intervalles ainsi obtenus avec ceux déterminés en précédence.

Dans le présent document on a toujours considéré que chaque machine attribue une date à des données et les enregistre localement. Il est cependant entendu que le cas dans lequel les données sont datées localement par une première machine et ensuite transmises sur le réseau pour être enregistrées par une deuxième machine fait également partie du cadre de l'invention.

Bien que, dans l'exemple considéré plus haut, on ait choisi de synchroniser les données de deux machines (A et B) par rapport au temps local d'une d'entre elles (A), on aurait pu également synchroniser ces données par rapport à une autre référence temporelle monotone, telle que le temps local de la machine C.

### Tab.A

| | TL1 | TR | TL2 | NMR | TMR |
|---|---|---|---|---|---|
| | 7847371499 | 0002053250 | 0000000033 | A | 7847371792 |
| | 7848387044 | 0003069125 | 0000000029 | A | 7848387342 |
| $\alpha 1$ | ... | | | | |
| | 7860580135 | 0015265875 | 0000000012 | A | 7860580402 |
| | 7861589993 | 0016276000 | 0000000035 | A | 7861590339 |
| | 0 | 0 | 0 | BUS_RESET | 0 |
| | 7863621113 | 0001457250 | 0000000030 | A | 7863621392 |
| | 7864636709 | 0002473125 | 0000000030 | A | 7864636991 |
| $\alpha 2$ | ... | | | | |
| | 7908307691 | 0046157250 | 0000000028 | A | 7908308006 |
| | 7909323310 | 0047173250 | 0000000029 | A | 7909323615 |
| | 0 | 0 | 0 | BUS_RESET | 0 |
| | 7911354504 | 0001500125 | 0000000029 | A | 7911354787 |
| | 7912370110 | 0002516000 | 0000000028 | A | 7912370388 |
| $\alpha 3$ | ... | | | | |
| | 7922526148 | 0012675125 | 0000000033 | A | 7922526444 |
| | 7923541829 | 0013691125 | 0000000025 | A | 7923542076 |
| | 0 | 0 | 0 | BUS_RESET | 0 |
| | 7925572961 | 0001587625 | 0000000029 | B | 8070483980 |
| | 7926588585 | 0002603375 | 0000000028 | B | 8071499635 |
| $\alpha 4$ | ... | | | | |
| | 7937760209 | 0013776000 | 0000000029 | B | 8082671426 |
| | 7938775811 | 0014791625 | 0000000029 | B | 8083687070 |
| | 0 | 0 | 0 | BUS_RESET | 0 |

(suite)

|  | TL1 | TR | TL2 | NMR | TMR |
|---|---|---|---|---|---|
|  | 7940807022 | 0001060125 | 0000000016 | A | 7940807282 |
|  | 7941822622 | 0002075750 | 0000000013 | A | 7941822884 |
| α5 | ... |  |  |  |  |
|  | 7947916246 | 0008170000 | 0000000013 | A | 7947916494 |
|  | 7948931871 | 0009185625 | 0000000029 | A | 7948932165 |
|  | 0 | 0 | 0 | BUS_RESET | 0 |
|  | 7950963061 | 0001708500 | 0000000029 | B | 8095874551 |
|  | 7951978665 | 0002724500 | 0000000026 | B | 8096890166 |
| α6 | ... |  |  |  |  |
|  | 7957056687 | 0007804000 | 0000000030 | B | 8101968339 |
|  | 7958072288 | 0008819875 | 0000000026 | B | 8102983900 |
|  | 0 | 0 | 0 | BUS_RESET | 0 |
|  | 7960103503 | 0001121000 | 0000000028 | A | 7960103794 |
|  | 7961119119 | 0002136875 | 0000000024 | A | 7961119386 |
| α7 | ... |  |  |  |  |
|  | 7966197126 | 0007216500 | 0000000028 | A | 7966197419 |
|  | 7967212732 | 0008232375 | 0000000028 | A | 7967213023 |
|  | 0 | 0 | 0 | BUS_RESET | 0 |
|  | 7969243956 | 0001133375 | 0000000029 | A | 7969244557 |
|  | 7970259542 | 0002149250 | 0000000030 | A | 7970259820 |
| α8 | ... |  |  |  |  |
|  | 8006821287 | 0038722000 | 0000000028 | A | 8006821557 |
|  | 8007836894 | 0039738000 | 0000000029 | A | 8007837177 |
|  | 0 | 0 | 0 | BUS_RESET | 0 |

**Tab.B**

|  | TL1 | TR | TL2 | NMR | TMR |
|---|---|---|---|---|---|
|  | 8022330108 | 0002126375 | 0000000066 | B | 8022331080 |
|  | 8023345715 | 0003142125 | 0000000042 | B | 8023346654 |
| ß1 | ... |  |  |  |  |
|  | 8030533201 | 0010330625 | 0000000037 | B | 8030534217 |
|  | 8031564504 | 0011362125 | 0000000048 | B | 8031565573 |
|  | 0 | 0 | 0 | BUS_RESET | 0 |
|  | 8033642626 | 0001864375 | 0000000048 | C | 0301503876 |
|  | 8034673830 | 0002895625 | 0000000025 | C | 0302534856 |
| ß2 |  |  |  |  |  |
|  | 8049111328 | 0017335250 | 0000000028 | C | 0316972351 |
|  | 8050142610 | 0018366750 | 0000000038 | C | 0318003740 |
|  | 0 | 0 | 0 | BUS_RESET | 0 |
|  | 8052220716 | 0001644125 | 0000000042 | B | 8052221861 |
| ß3 | 8053251969 | 0002675500 | 0000000052 | B | 8053253220 |
|  | 8054283215 | 0003706875 | 0000000038 | B | 8054284434 |
|  | 0 | 0 | 0 | BUS_RESET | 0 |
|  | 8056377004 | 0001603625 | 0000000040 | A | 7911467875 |
|  | 8057423861 | 0002650750 | 0000000076 | A | 7912514861 |
| ß4 | ... |  |  |  |  |
|  | 8066845695 | 0012073875 | 0000000028 | A | 7921936130 |
|  | 8067892623 | 0013121000 | 0000000079 | A | 7922983134 |
|  | 0 | 0 | 0 | BUS_RESET | 0 |

(suite)

| | TL1 | TR | TL2 | NMR | TMR |
|---|---|---|---|---|---|
| | 8069986326 | 0001090375 | 0000000023 | B | 8069987185 |
| | 8071017587 | 0002121750 | 0000000044 | B | 8071018683 |
| ß5 | | | | | |
| | 8083392603 | 0014497625 | 0000000033 | B | 8083393725 |
| | 8084423819 | 0015528875 | 0000000027 | B | 8084424600 |
| | 0 | 0 | 0 | BUS_RESET | 0 |
| | 8086501954 | 0001835750 | 0000000035 | B | 8086502686 |
| | 8087533237 | 0002867125 | 0000000088 | B | 8087534237 |
| ß6 | ... | | | | |
| | 8092689512 | 0008024125 | 0000000056 | B | 8092690667 |
| | 8093720757 | 0009055625 | 0000000076 | B | 8093721770 |
| | 0 | 0 | 0 | BUS_RESET | 0 |
| | 8095798825 | 0001624750 | 0000000031 | B | 8095799819 |
| | 8096830098 | 0002656125 | 0000000045 | B | 8096831121 |
| ß7 | ... | | | | |
| | 8101986351 | 0007813125 | 0000000021 | B | 8101987503 |
| | 8103017580 | 0008844500 | 0000000037 | B | 8103018294 |
| | 0 | 0 | 0 | BUS_RESET | 0 |
| | 8105111335 | 0001208875 | 0000000026 | A | 7960200939 |
| | 8106158227 | 0002256000 | 0000000027 | A | 7961247922 |
| ß8 | ... | | | | |
| | 8111392602 | 0007491125 | 0000000032 | A | 7966482229 |
| | 8112439473 | 0008538125 | 0000000043 | A | 7967529242 |
| | 0 | 0 | 0 | BUS_RESET | 0 |
| | 8114533236 | 0001501875 | 0000000056 | B | 8114534120 |
| | 8115564503 | 0002533375 | 0000000033 | B | 8115565530 |
| ß9 | ... | | | | |
| | 8126908239 | 0013878750 | 0000000078 | B | 8126909116 |
| | 8127939466 | 0014910125 | 0000000029 | B | 8127940507 |
| | 0 | 0 | 0 | BUS_RESET | 0 |

**Tab.C**

| | TL1 | TR | TL2 | NMR | TMR |
|---|---|---|---|---|---|
| | 0245148935 | 0001123529 | 0000000016 | C | 0245149153 |
| γ1 | 0246149331 | 0002124009 | 0000000014 | C | 0246149485 |
| | ... | | | | |
| | 0256150754 | 0012126272 | 0000000015 | C | 0256150859 |
| | 0257150892 | 0013126494 | 0000000015 | C | 0257150996 |
| | 0 | 0 | 0 | BUS_RESET | 0 |
| | 0259151823 | 0001063357 | 0000000015 | A | 7846381976 |
| γ2 | 0260152246 | 0002063865 | 0000000015 | A | 7847382391 |
| | 0273269802 | 0015182521 | 0000000014 | A | 7860499923 |
| | 0274272003 | 0016184806 | 0000000015 | A | 7861502121 |
| | 0 | 0 | 0 | BUS_RESET | 0 |
| | 0276282222 | 0001348304 | 0000000015 | C | 0276282326 |
| | 0277282343 | 0002348510 | 0000000015 | C | 0277282446 |
| γ3 | ... | | | | |
| | 0298284888 | 0023352815 | 0000000015 | C | 0298284991 |

(suite)

| | TL1 | TR | TL2 | NMR | TMR |
|---|---|---|---|---|---|
| | 0299284994 | 0024353005 | 0000000015 | C | 0299285096 |
| | 0 | 0 | 0 | BUS_RESET | 0 |
| | 0301285283 | 0001656149 | 0000000015 | C | 0301285386 |
| | 0302285388 | 0002656338 | 0000000015 | C | 0302285493 |
| $\gamma 4$ | ... | | | | |
| | 0317286883 | 0017659090 | 0000000014 | C | 0317286987 |
| | 0318286979 | 0018659270 | 0000000015 | C | 0318287084 |
| | 0 | 0 | 0 | BUS_RESET | 0 |
| | 0320287256 | 0001859382 | 0000000015 | C | 0320287363 |
| | 0321287352 | 0002859562 | 0000000015 | C | 0321287454 |
| $\gamma 5$ | ... | | | | |
| | 0335288551 | 0016861934 | 0000000014 | C | 0335288653 |
| | 0336288634 | 0017862101 | 0000000015 | C | 0336288737 |
| | 0 | 0 | 0 | BUS_RESET | 0 |
| | 0338293102 | 0001537616 | 0000000015 | B | 8070433663 |
| | 0339303052 | 0002547650 | 0000000015 | B | 8071443653 |
| $\gamma 6$ | ... | | | | |
| | 0351413246 | 0014658859 | 0000000015 | B | 8083554023 |
| | 0352423266 | 0015668964 | 0000000015 | B | 8084564099 |
| | 0 | 0 | 0 | BUS_RESET | 0 |
| | 0354433721 | 0001916670 | 0000000015 | A | 7941663622 |
| | 0355447719 | 0002930752 | 0000000014 | A | 7942677620 |
| $\gamma 7$ | ... | | | | |
| | 0360493391 | 0007976846 | 0000000014 | A | 7947723296 |
| | 0361503412 | 0008986952 | 0000000014 | A | 7948733336 |
| | 0 | 0 | 0 | BUS_RESET | 0 |
| | 0363515461 | 0001490559 | 0000000014 | B | 8095656411 |
| | 0364523458 | 0002498640 | 0000000014 | B | 8096664477 |
| $\gamma 8$ | ... | | | | |
| | 0370583555 | 0008559245 | 0000000014 | B | 8102724637 |
| | 0371593569 | 0009569344 | 0000000015 | B | 8103734677 |
| | 0 | 0 | 0 | BUS_RESET | 0 |
| | 0373603746 | 0001851003 | 0000000015 | C | 0373603849 |
| | 0374603801 | 0002851142 | 0000000015 | C | 0374603904 |
| $\gamma 9$ | ... | | | | |
| | 0394604775 | 0022853791 | 0000000015 | C | 0394604877 |
| | 0395604811 | 0023853910 | 0000000015 | C | 0395604914 |
| | 0 | 0 | 0 | BUS_RESET | 0 |

**Revendications**

1. Procédé pour établir une correspondance par intervalles ($[T_B]$, $[T_{AB}]$) entre le temps ($T_B$) indiqué par une première horloge ($H_B$) monotone et le temps ($T_A$) indiqué par une deuxième horloge ($H_A$), également monotone, **caractérisé en ce qu'**il met en oeuvre, sur au moins une plage temporelle (P1, P4), une première référence temporelle (NT) commune à la première et à la deuxième horloge et monotone sur ladite plage, et **en ce que** ledit procédé comporte les étapes suivantes :

a) détermination d'un premier intervalle temporel ($[T_B^1]$) délimité par un premier couple de valeurs du temps ($T_B$) de la première horloge ($H_B$) et appartenant à une première plage temporelle (P1) sur laquelle existe ladite première référence temporelle (NT) commune à la première et à la deuxième horloge ;

b) détermination d'un deuxième intervalle temporel ($[T_B^2]$) délimité par un deuxième couple de valeurs du temps ($T_B$) de la première horloge ($H_B$) et appartenant à une deuxième plage temporelle (P4) sur laquelle existe ladite première référence temporelle (NT) commune à la première et à la deuxième horloge ;

c) détermination, à l'aide de la référence temporelle commune (NT), d'un troisième intervalle temporel ($[T_{AB}^1]$), délimité par un premier couple de valeurs du temps ($T_A$) de la deuxième horloge ($H_A$), et contenant le premier intervalle temporel ($[T_B^1]$);

d) détermination, à l'aide de la référence temporelle commune (NT), d'un quatrième intervalle temporel ($[T_{AB}^2]$), délimité par un deuxième couple de valeurs du temps ($T_A$) de la deuxième horloge ($H_A$), et contenant ledit deuxième intervalle temporel ($[T_B^2]$) ;

e) pour un cinquième intervalle temporel ($[T_B]$) quelconque délimité par un troisième couple de valeurs du temps ($T_B$) de la première horloge ($H_B$), calcul d'un sixième intervalle temporel ($[T_{AB}]$), délimité par un troisième couple de valeurs du temps ($T_A$) de la deuxième horloge ($H_A$) et contenant ledit cinquième intervalle temporel ($[T_B]$), le calcul étant effectué par interpolation ou extrapolation à l'aide desdits premier ($[T_B^1]$), deuxième ($[T_B^2]$), troisième ($[T_{AB}^1]$) et quatrième ($[T_{AB}^2]$) intervalles.

2. Procédé selon la revendication 1, dans lequel l'étape c) comporte les opérations suivantes :

c1) détermination d'un septième ($[T_{A1}^1]$) et d'un huitième ($[T_{A2}^1]$) intervalle temporel, délimités par un quatrième et cinquième couple de valeurs du temps ($T_A$) de la deuxième horloge ($H_A$) respectivement et appartenant à la première plage temporelle (P1), tels que ledit premier intervalle temporel ($[T_B^1]$) est compris entre lesdits septième ($[T_{A1}^1]$) et huitième ($[T_{A2}^1]$) intervalles temporels;

c2) détermination d'une premiere ($NT_B^1$), deuxième ($NT_{A1}^1$) et troisième ($NT_{A2}^1$) valeur de la première référence temporelle commune (NT), comprises dans lesdits premier ($[T_B^1]$), septième ($[T_{A1}^1]$) et huitième ($[T_{A2}^1]$) intervalles temporels respectivement ;

c3) calcul par interpolation dudit troisième ($[T_{AB}^1]$) intervalle temporel, à l'aide desdits premier ($[T_B^1]$), septième ($[T_{A1}^1]$) et huitième ($[T_{A2}^1]$) intervalles temporels et desdites première ($NT_B^1$), deuxième ($NT_{A1}^1$) et troisième ($NT_{A2}^1$) valeurs de la première référence temporelle commune (NT) ;

et dans lequel l'étape d) comporte les opérations suivantes :

d1) détermination d'un neuvième ($[T_{A1}^2]$) et d'un dixième ($[T_{A2}^2]$) intervalle temporel, délimités par un sixième et septième couple de valeurs du temps ($T_A$) de la deuxième horloge ($H_A$) respectivement et appartenant à la deuxième plage temporelle (P4), tels que ledit deuxième intervalle temporel ($[T_B^2]$) est compris entre lesdits neuvième ($[T_{A1}^2]$) et dixième ($[T_{A2}^2]$) intervalles ;

d2) détermination d'une quatrième ($NT_B^2$), cinquième ($NT_{A1}^2$) et sixième ($NT_{A2}^2$) valeur de la première référence temporelle commune (NT), comprises dans lesdits deuxième ($[T_B^2]$), neuvième ($[T_{A1}^2]$) et dixième ($[T_{A2}^2]$) intervalles temporels respectivement ;

d3) calcul par interpolation dudit quatrième ($[T_{AB}^2]$) intervalles temporels, à l'aide desdits deuxième ($[T_B^2]$), neuvième ($[T_{A1}^2]$) et dixième ($[T_{A2}^2]$) intervalle temporel et desdites quatrième ($NT_B^2$), cinquième ($NT_{A1}^2$) et sixième ($NT_{A2}^2$) valeurs de la première référence temporelle commune (NT).

3. Procédé selon la revendication 1, dans lequel l'étape c) comporte les opérations suivantes :

c1) détermination d'une septième ($T_{A1}^1$) et d'une huitième ($T_{A2}^1$) valeur du temps ($T_A$) de la deuxième horloge ($H_A$) appartenant à la première plage temporelle (P1), tels que ledit premier intervalle temporel ($[T_B^1]$) est compris entre lesdits septième ($T_{A1}^1$) et huitième ($T_{A2}^1$) valeurs;

c2) détermination d'une première ($[NT_B^1]$), deuxième ($[NT_{A1}^1]$) et troisième ($[NT_{A2}^1]$) intervalle de valeurs de la première référence temporelle commune (NT), comprenant ledit premier intervalle temporel ($[T_B^1]$) et lesdites septième ($T_{A1}^1$) et huitième ($T_{A2}^1$) valeurs du temps ($T_A$) de la deuxième horloge ($H_A$) respectivement;

c3) calcul par interpolation dudit troisième ($[T_{AB}^1]$) intervalle temporel, à l'aide dudit premier intervalle ($[T_B^1]$) de valeurs du temps ($T_B$) de la première horloge ($H_B$), desdites septième ($T_{A1}^1$) et huitième ($T_{A2}^1$) valeurs du temps ($T_A$) de la deuxième horloge ($H_A$) et desdits premier ($[NT_B^1]$), deuxième ($[NT_{A1}^1]$) et troisième ($[NT_{A2}^1]$) intervalles de valeurs de la première référence temporelle commune (NT) ;

et dans lequel l'étape d) comporte les opérations suivantes :

d1) détermination d'une neuvième ($T_{A1}^2$) et d'une dixième ($T_{A2}^2$) valeurs du temps ($T_A$) de la deuxième horloge ($H_A$) appartenant à la deuxième plage temporelle (P4), tels que ledit deuxième intervalle temporel ($[T_B^2]$) est

compris entre lesdites neuvième ($T_{A1}^2$) et dixième ($T_{A2}^2$) valeurs ;

d2) détermination d'un quatrième ($[NT_B^2]$), cinquième ($[NT_{A1}^2]$) et sixième ($[NT_{A2}^2]$) intervalle de valeur de la première référence temporelle commune (NT), comprenant ledit deuxième ($[T_B^2]$) intervalle temporel et lesdites neuvième ($T_{A1}^2$) et dixième ($T_{A2}^2$) valeurs du temps ($T_A$) de la deuxième horloge ($H_A$);

d3) calcul par interpolation dudit quatrième ($[T_{AB}^2]$) intervalle temporel, à l'aide dudit deuxième intervalle ($[T_B^2]$) de valeurs du temps ($T_B$) de la première horloge ($H_B$), desdites neuvième ($T_{A1}^1$) et dixième ($T_{A2}^1$) valeurs du temps ($T_A$) de la deuxième horloge ($H_A$) et desdits quatrième ($[NT_B^1]$), cinquième ($[NT_{A1}^1]$) et sixième ($[NT_{A2}^1]$) intervalles de valeurs de la première référence temporelle commune (NT).

**4.** Procédé selon la revendication 2, dans lequel l'opération c3) est effectuée en remplaçant lesdites première ($NT_B^1$), deuxième ($NT_{A1}^1$) et troisième ($NT_{A2}^1$) valeurs de la référence temporelle commune (NT) par des intervalles temporels ($[NT_B^1]$, $[NT_{A1}^1]$, $[NT_{A2}^1]$) dont la largeur est égale à la discrétisation de la première référence temporelle commune (NT) sur la première plage temporelle (P1),
et dans lequel l'opération d3) est effectuée en remplaçant lesdites quatrième ($NT_B^2$), cinquième ($NT_{A1}^2$) et sixième ($NT_{A2}^2$) valeurs de la référence temporelle commune (NT) par des intervalles temporels ($[NT_B^2]$, $[NT_{A1}^2]$, $[NT_{A2}^2]$) dont la largeur est égale à la discrétisation de la première référence temporelle commune (NT) sur la deuxième plage temporelle (P4).

**5.** Procédé selon la revendication 3, dans lequel les opérations c3) et d3) sont effectuées en remplaçant lesdites septième ($T_{A1}^1$), huitième ($T_{A2}^1$), neuvième ($T_{A1}^2$) et dixième ($T_{A2}^2$) valeurs du temps ($T_A$) de la deuxième horloge ($H_A$) par des intervalles temporels ($[T_{A1}^1]$, $[T_{A1}^2]$, $[T_{A2}^1]$, $[T_{A2}^2]$) dont la largeur est égale à la discrétisation du temps ($T_A$) de la deuxième horloge ($H_A$).

**6.** Procédé selon la revendication 2 ou 4 dans lequel, pendant la ou les plages temporelles (P1, P4) sur lesquelles existe une première référence temporelle commune (NT), on enregistre à plusieurs reprises une première lecture de la première horloge (TL1 - FHB), suivie par une lecture de la première référence temporelle commune (TR - FHB) et ensuite par une deuxième lecture de la première horloge (TL2 - FHB), et de manière indépendante on enregistre, également à plusieurs reprises, une première lecture de la deuxième horloge (TL1 - FHA), suivie par une lecture de la première référence temporelle commune (TR - FHA) et ensuite par une deuxième lecture de la deuxième horloge (TL2 - FHA), et dans lequel les opérations c1), c2), c3), d1), d2) et d3) sont effectuées à l'aide de ces enregistrements.

**7.** Procédé selon la revendication 3 ou 5 dans lequel, pendant la ou les plages temporelles (P1, P4) sur lesquelles existe une première référence temporelle commune (NT), on enregistre à plusieurs reprises une première lecture de la première référence temporelle commune (NT), suivie par une lecture de la première horloge ($H_B$) et ensuite par une deuxième lecture de la première référence temporelle commune (NT), et de manière indépendante on enregistre, également à plusieurs reprises, une première lecture de la première référence temporelle commune (NT), suivie par une lecture de la de la deuxième horloge ($H_A$) et ensuite par une deuxième lecture de la première référence temporelle commune (NT), et dans lequel les opérations c1), c2), c3), d1), d2) et d3) sont effectuées à l'aide de ces enregistrements.

**8.** Procédé selon l'une des revendications 1 à 7 dans lequel l'étape e) s'effectue par interpolation linéaire par intervalles ou par extrapolation linéaire par intervalles.

**9.** Procédé selon l'une des revendications 2 à 7, ou 8 lorsque cette dernière dépend des revendications 2 ou 3, dans lequel les opérations c3) et d3) s'effectuent par interpolation linéaire par intervalles.

**10.** Procédé selon l'une des revendications 1 à 9 dans lequel la première référence temporelle (NT) commune à la première et à la deuxième horloge existe sur au moins deux plages temporelles distinctes (P1, P4) et peut comporter une rupture de monotonie d'une plage temporelle à l'autre, une deuxième référence temporelle commune monotone (TMR - NMR) étant utilisée afin de résoudre les ambiguïtés qui résultent de la non-monotonie de la première référence temporelle commune (NT).

**11.** Procédé de synchronisation des données enregistrées et datées par une première machine (B), ayant une première horloge ($H_B$), par rapport au temps local d'une deuxième machine (A), ayant une deuxième horloge ($H_A$), **caractérisé en ce que** la datation s'effectue en associant à chaque donnée enregistrée par la première machine un cinquième intervalle temporel ($[T_B]$), délimité par un troisième couple de valeurs du temps ($T_B$) de la première horloge ($H_B$), et **en ce que** la synchronisation s'effectue en déterminant, par un procédé selon l'une des revendications 1 à 10, un sixième intervalle temporel ($[T_{AB}]$), délimité par un troisième couple de valeurs du temps ($T_A$) de la deuxième horloge ($H_A$) et contenant ledit cinquième intervalle temporel ($[T_B]$).

12. Procédé selon la revendication 11 dans lequel la première référence temporelle commune (NT) est fournie par une horloge ($H_{BUS}$) d'un bus (BUS) qui relie au moins temporairement lesdites première et deuxième machines.

13. Procédé selon l'une des revendications 11 ou 12, qui se décompose en un premier sous-procédé d'enregistrement de lectures d'horloges selon la revendication 6 ou 7, effectué localement par chaque machine dont on veut pouvoir synchroniser les données, et un deuxième procédé de synchronisation proprement dite, effectué par une machine vers laquelle des données ont été transférées après la fin de la session d'enregistrement des données.

**Patentansprüche**

1. Verfahren zur Herstellung einer Übereinstimmung in Intervallen ($[T_B]$, $[T_{AB}]$) zwischen der Zeit ($T_B$), angezeigt von einer ersten monotonen Uhr ($H_B$), und der Zeit ($T_A$), angezeigt von einer zweiten, ebenfalls monotonen Uhr ($H_A$), **dadurch gekennzeichnet, dass** es über mindestens einen Zeitabschnitt (P1, P4) eine erste Zeitreferenz (NT) umsetzt, die der ersten und der zweiten Uhr gemeinsam ist und monoton in dem Bereich, und dass das Verfahren die folgenden Schritte aufweist:

   a) Bestimmen eines ersten Zeitintervalls ($[T_B{}^1]$), das von einem ersten Wertepaar der Zeit ($T_B$) der ersten Uhr ($H_B$) begrenzt ist und zu einem ersten Zeitabschnitt (P1) gehört, in welchem die erste Zeitreferenz (NT), die der ersten und der zweiten Uhr gemeinsam ist, vorhanden ist;
   b) Bestimmen eines zweiten Zeitintervalls ($[T_B{}^2]$), das von einem zweiten Wertepaar der Zeit ($T_B$) der ersten Uhr ($H_B$) begrenzt ist und zu einem zweiten Zeitabschnitt (P4) gehört, in welchem die erste Zeitreferenz (NT), die der ersten und der zweiten Uhr gemeinsam ist, vorhanden ist;
   c) Bestimmen, mit Hilfe der gemeinsamen Zeitreferenz (NT), eines dritten Zeitintervalls ($[T_{AB}{}^1]$), das von einem ersten Wertepaar der Zeit ($T_A$) der zweiten Uhr ($H_A$) begrenzt ist und das erste Zeitintervall ($[T_B{}^1]$) enthält;
   d) Bestimmen, mit Hilfe der gemeinsamen Zeitreferenz (NT), eines vierten Zeitintervalls ($[T_{AB}{}^2]$), das von einem zweiten Wertepaar der Zeit ($T_A$) der zweiten Uhr ($H_A$) begrenzt ist und das zweite Zeitintervall ($[T_B{}^2]$) enthält;
   e) für ein beliebiges fünftes Zeitintervall ($[T_B]$), das von einem dritten Wertepaar der Zeit ($T_B$) der ersten Uhr ($H_B$) begrenzt ist, Berechnen eines sechsten Zeitintervalls ($[T_{AB}]$), das von einem dritten Wertepaar der Zeit ($T_A$) der zweiten Uhr ($H_A$) begrenzt ist und das fünfte Zeitintervall ($[T_B]$) enthält, wobei die Berechnung durch Interpolation oder Extrapolation mit Hilfe des ersten ($[T_B{}^1]$), zweiten ($[T_B{}^2]$), dritten ($[T_{AB}{}^1]$) und vierten ($[T_{AB}{}^2]$) Intervalls durchgeführt wird.

2. Verfahren nach Anspruch 1, wobei der Schritt c) die folgenden Operationen aufweist:

   c1) Bestimmen eines siebenten ($[T_{A1}{}^1]$) und eines achten ($[T_{A2}{}^1]$) Zeitintervalls, das jeweils von einem vierten und fünften Wertepaar der Zeit ($T_A$) der zweiten Uhr ($H_A$) begrenzt ist und zum ersten Zeitabschnitt (P1) gehört, so dass das erste Zeitintervall ($[T_B{}^1]$) zwischen dem siebenten ($[T_{A1}{}^1]$) und achten ($[T_{A2}{}^1]$) Zeitintervall inbegriffen ist;
   c2) Bestimmen eines ersten ($NT_B{}^1$), zweiten ($NT_{A1}{}^1$) und dritten ($NT_{A2}{}^1$) Werts der ersten gemeinsamen Zeitreferenz (NT), die jeweils im ersten ($[T_B{}^1]$), siebenten ($[T_{A1}{}^1]$) und achten ($[T_{A2}{}^1]$) Zeitintervall inbegriffen sind;
   c3) Berechnen durch Interpolation des dritten Zeitintervalls ($[T_{AB}{}^1]$) mit Hilfe des ersten ($[T_B{}^1]$), siebenten ($[T_{A1}{}^1]$) und achten ($[T_{A2}{}^1]$) Zeitintervalls und des ersten ($NT_B{}^1$), zweiten ($NT_{A1}{}^1$) und dritten ($NT_{A2}{}^1$) Werts der ersten gemeinsamen Zeitreferenz (NT);

   und wobei der Schritt d) die folgenden Operationen aufweist:

   d1) Bestimmen eines neunten ($[T_{A1}{}^2]$) und eines zehnten ($[T_{A2}{}^2]$) Zeitintervalls, das jeweils von einem sechsten und siebenten Wertepaar der Zeit ($T_A$) der zweiten Uhr ($H_A$) begrenzt ist und zum zweiten Zeitabschnitt (P4) gehört, so dass das zweiten Zeitintervall ($[T_B{}^2]$) zwischen dem neunten ($[T_{A1}{}^2]$) und zehnten ($[T_{A2}{}^2]$) Intervall inbegriffen ist;
   d2) Bestimmen eines vierten ($NT_B{}^2$), fünften ($NT_{A1}{}^2$) und sechsten ($NT_{A2}{}^2$) Werts der ersten gemeinsamen Zeitreferenz (NT), der jeweils im zweiten ($[T_B{}^2]$), neunten ($[T_{A1}{}^2]$) und zehnten ($[T_{A2}{}^2]$) Zeitintervall enthalten ist;
   d3) Berechnen durch Interpolation des vierten Zeitintervalls ($[T_{AB}{}^2]$) mit Hilfe des zweiten ($[T_B{}^2]$), neunten ($[T_{A1}{}^2]$) und zehnten ($[T_{A2}{}^2]$) Zeitintervalls und des vierten ($NT_B{}^2$), fünften ($NT_{A1}{}^2$) und sechsten ($NT_{A2}{}^2$) Werts der

ersten gemeinsamen Zeitreferenz (NT).

3. Verfahren nach Anspruch 1, wobei der Schritt c) die folgenden Operationen aufweist:

c1) Bestimmen eines siebenten ($T_{A1}^1$) und eines achten ($T_{A2}^1$) Werts der Zeit ($T_A$) der zweiten Uhr ($H_A$), der zum ersten Zeitabschnitt (P1) gehört, so dass das erste Zeitintervall ($[T_B^1]$) zwischen dem siebenten ($T_{A1}^1$) und achten ($T_{A2}^1$) Wert inbegriffen ist;
c2) Bestimmen eines ersten ($[NT_B^1]$), zweiten ($[NT_{A1}^1]$) und dritten ($[NT_{A2}^1]$) Werteintervalls der ersten gemeinsamen Zeitreferenz (NT), umfassend das erste Zeitintervall ($[T_B^1]$) und den jeweils siebenten ($T_{A1}^1$) und achten ($T_{A2}^1$) Werts der Zeit ($T_A$) der zweiten Uhr ($H_A$) ;
c3) Berechnen durch Interpolation des dritten ($[T_{AB}^1]$) Zeitintervalls mit Hilfe des ersten Werteintervalls ($[T_B^1]$) der Zeit ($T_B$) der ersten Uhr ($H_B$), des siebenten ($T_{A1}^1$) und achten ($T_{A2}^1$) Werts der Zeit ($T_A$) der zweiten Uhr ($H_A$) und des ersten ($[NT_B^1]$), zweiten ($[NT_{A1}^1]$) und dritten ($[NT_{A2}^1]$) Werteintervalls der ersten gemeinsamen Zeitreferenz (NT);

und wobei der Schritt d) die folgenden Operationen aufweist:

d1) Bestimmen eines neunten ($T_{A1}^2$) und eines zehnten ($T_{A2}^2$) Werts der Zeit ($T_A$) der zweiten Uhr ($H_A$), der zum zweiten Zeitabschnitt (P4) gehört, so dass das zweite Zeitintervall ($[T_B^2]$) zwischen dem neunten ($T_{A1}^2$) und zehnten ($T_{A2}^2$) Wert inbegriffen ist;
d2) Bestimmen eines vierten ($[NT_B^2]$), fünften ($[NT_{A1}^2]$) und sechsten ($[NT_{A2}^2]$) Werteintervalls der ersten gemeinsamen Zeitreferenz (NT), umfassend das zweite ($[T_B^2]$) Zeitintervall und den neunten ($T_{A1}^2$) und zehnten ($T_{A2}^2$) Wert der Zeit ($T_A$) der zweiten Uhr ($H_A$);
d3) Berechnen durch Interpolation des vierten ($[T_{AB}^2]$) Zeitintervalls mit Hilfe des zweiten Werteintervalls ($[T_B^2]$) der Zeit ($T_B$) der ersten Uhr ($H_B$), des neunten ($T_{A1}^1$) und zehnten ($T_{A2}^1$) Werts der Zeit ($T_A$) der zweiten Uhr ($H_A$) und des vierten ($[NT_B^1]$), fünften ($[NT_{A1}^1]$) und sechsten ($[NT_{A2}^1]$) Werteintervalls der ersten gemeinsamen Zeitreferenz (NT).

4. Verfahren nach Anspruch 2, wobei die Operation c3) durch Ersetzen des ersten ($NT_B^1$), zweiten ($NT_{A1}^1$) und dritten ($NT_{A2}^1$) Werts der gemeinsamen Zeitreferenz (NT) durch Zeitintervalle ($[NT_B^1]$, $[NT_{A1}^1]$, $[NT_{A2}^1]$) durchgeführt wird, deren Breite der Diskretisierung der ersten gemeinsamen Zeitreferenz (NT) im ersten Zeitabschnitt (P1) entspricht, und wobei die Operation d3) durch Ersetzen des vierten ($NT_B^2$), fünften ($NT_{A1}^2$) und sechsten ($NT_{A2}^2$) Werts der gemeinsamen Zeitreferenz (NT) durch Zeitintervalle ($[NT_B^2]$, $[NT_{A1}^2]$, $[NT_{A2}^2]$) durchgeführt wird, deren Breite gleich der Diskretisierung der ersten gemeinsamen Zeitreferenz (NT) im zweiten Zeitabschnitt (P4) entspricht.

5. Verfahren nach Anspruch 3, wobei die Operationen c3) und d3) durch Ersetzen des siebenten ($T_{A1}^1$), achten ($T_{A2}^1$), neunten ($T_{A1}^2$) und zehnten ($T_{A2}^2$) Werts der Zeit ($T_A$) der zweiten Uhr ($H_A$) durch Zeitintervalle ($[T_{A1}^1]$, $[T_{A1}^2]$, $[T_{A2}^1]$, $[T_{A2}^2]$) durchgeführt wird, deren Breite der Diskretisierung der Zeit ($T_A$) der zweiten Uhr ($H_A$) entspricht.

6. Verfahren nach Anspruch 2 oder 4 wobei, während des oder der Zeitabschnitte (P1, P4), für die es eine erste gemeinsame Zeitreferenz (NT) gibt, mehrmals eine erste Ablesung der ersten Uhr (TL1 - FHB), gefolgt von einer Ablesung der ersten gemeinsamen Zeitreferenz (TR - FHB) und danach von einer zweiten Ablesung der ersten Uhr (TL2 - FHB), aufgezeichnet wird, und unabhängig, ebenfalls mehrmals, eine erste Ablesung der zweiten Uhr (TL1 - FHA), gefolgt von einer Ablesung der ersten gemeinsamen Zeitreferenz (TR - FHA) und danach von einer zweiten Ablesung der zweiten Uhr (TL2 - FHA), aufgezeichnet wird, und wobei die Operationen c1), c2), c3), d1), d2) und d3) mit Hilfe dieser Aufzeichnungen durchgeführt werden.

7. Verfahren nach Anspruch 3 oder 5 wobei, während des oder der Zeitabschnitte (P1, P4), für die es eine erste gemeinsame Zeitreferenz (NT) gibt, mehrmals eine erste Ablesung der ersten gemeinsamen Zeitreferenz (NT), gefolgt von einer Ablesung der ersten Uhr ($H_B$) und danach von einer zweiten Ablesung der ersten gemeinsamen Zeitreferenz (NT), aufgezeichnet wird, und unabhängig, ebenfalls mehrmals, eine erste Ablesung der ersten gemeinsamen Zeitreferenz (NT), gefolgt von einer Ablesung der zweiten Uhr ($H_A$) und danach von einer zweiten Ablesung der ersten gemeinsamen Zeitreferenz (NT), aufgezeichnet wird, und wobei die Operationen c1), c2), c3), d1), d2) und d3) mit Hilfe dieser Aufzeichnungen durchgeführt werden.

8. Verfahren nach einem der Ansprüche 1 bis 7, wobei der Schritt e) durch lineare Interpolation in Intervallen oder durch lineare Extrapolation in Intervallen durchgeführt wird.

9. Verfahren nach einem der Ansprüche 2 bis 7 oder 8, wenn dieser von den Ansprüchen 2 oder 3 abhängt, wobei die Operationen c3) und d3) durch lineare Interpolation in Intervallen durchgeführt werden.

10. Verfahren nach einem der Ansprüche 1 bis 9, wobei die erste Zeitreferenz (NT), die der ersten und der zweiten Uhr gemeinsam ist, in mindestens zwei unterschiedlichen Zeitabschnitten (P1, P4) vorhanden ist und einen Monotoniebruch von einem Zeitabschnitt zum anderen aufweisen kann, wobei eine zweite gemeinsame monotone Zeitreferenz (TMR - NMR) verwendet wird, um Zweideutigkeiten zu lösen, die sich aus der Nicht-Monotonie der ersten gemeinsamen Zeitreferenz (NT) ergeben.

11. Synchronisationsverfahren der von einer ersten Maschine (B) aufgezeichneten und datierten Daten mit einer ersten Uhr ($H_B$) in Bezug zur lokalen Zeit einer zweiten Maschine (A) mit einer zweiten Uhr ($H_A$), **dadurch gekennzeichnet, dass** die Datierung durch Zuordnung eines fünften Zeitintervalls ($[T_B]$), begrenzt durch ein drittes Wertepaar der Zeit ($T_B$) der ersten Uhr ($H_B$), zu jeder von der ersten Maschine aufgezeichneten Angabe erfolgt, und dass die Synchronisierung durch Bestimmung mittels eines Verfahrens nach einem der Ansprüche 1 bis 10 eines sechsten Zeitintervalls ($[T_{AB}]$), begrenzt durch ein drittes Wertepaar der Zeit ($T_A$) der zweiten Uhr ($H_A$) und enthaltend das fünfte Zeitintervall ($[T_B]$), erfolgt.

12. Verfahren nach Anspruch 11, wobei die erste gemeinsame Zeitreferenz (NT) von einer Uhr ($H_{BUS}$) eines Bus (BUS) bereitgestellt wird, der mindestens zeitweise die erste und zweite Maschine verbindet.

13. Verfahren nach einem der Ansprüche 11 oder 12, das in ein erstes Unterverfahren der Aufzeichnung von Ablesungen von Uhren nach Anspruch 6 oder 7 unterteilt ist, lokal durchgeführt von jeder Maschine, deren Daten man synchronisieren können möchte, und in ein zweites, eigentliches Synchronisierungsverfahren, durchgeführt von einer Maschine, zu der die Daten nach Ende der Aufzeichnungssitzung der Daten übertragen wurden.

**Claims**

1. A method for establishing a correspondence by intervals ($[T_B]$, $[T_{AB}]$) between the time ($T_B$) indicated by a first monotonic clock ($H_B$) and the time ($T_A$) indicated by a second clock ($H_A$), also monotonic, **characterized in that** it operates, over at least one temporal range (P1, P4), a first temporal reference (NT) common to the first and to the second clock and monotonic over said range, and **in that** said method comprises the steps of:

a) determining a first temporal interval ($[T_B^1]$) bounded by a first pair of time values ($T_B$) of the first clock ($H_B$) and belonging to a first temporal range (P1) over which the first temporal reference (NT) common to the first and to the second clock exists;
b) determining a second temporal interval ($[T_B^2]$) bounded by a second pair of time values ($T_B$) of the first clock ($H_B$) and belonging to a second temporal range (P4) over which the first temporal reference (NT) common to the first and to the second clock exists;
c) determining, by means of the common temporal reference (NT), a third temporal interval ($[T_{AB}^1]$), bounded by a first pair of time values ($T_A$) of the second clock ($H_A$), and containing the first temporal interval ($[T_B^1]$);
d) determining, by means of the common temporal reference (NT), a fourth temporal interval ($[T_{AB}^2]$), bounded by a second pair of time values ($T_A$) of the second clock ($H_A$), and containing the second temporal interval ($[T_B^2]$);
e) for any given fifth temporal interval ($[T_B]$) bounded by a third pair of time values ($T_B$) of the first clock ($H_B$), calculating a sixth temporal interval ($[T_{AB}]$), bounded by a third pair of time values ($T_A$) of the second clock ($H_A$), and containing said fifth temporal interval ($[T_B]$), the calculation being performed by interpolation or extrapolation using said first ($[T_B^1]$), second ($[T_B^2]$), third ($[T_{AB}^1]$) and fourth ($[T_{AB}^2]$) intervals.

2. The method as claimed in claim 1, wherein the step c) comprises the operations of:

c1) determining a seventh ($[T_{A1}^1]$) and an eighth ($[T_{A2}^1]$) temporal interval, bounded by a fourth and fifth pair of time values ($T_A$) of the second clock ($H_A$), respectively, and belonging to the first temporal range (P1), such that the first temporal interval ($[T_B^1]$) falls in the range between said seventh ($[T_{A1}^1]$) and eighth ($[T_{A2}^1]$) temporal intervals;
c2) determining a first ($NT_B^1$), second ($NT_{A1}^1$) and third ($NT_{A2}^1$) value of the first common temporal reference (NT), included in said first ($[T_B^1]$), seventh ($[T_{A1}^1]$) and eighth ($[T_{A2}^1]$) temporal intervals, respectively;
c3) calculating, by interpolation, said third ($[T_{AB}^1]$) temporal interval, using said first ($[T_B^1]$), seventh ($[T_{A1}^1]$) and eighth ($[T_{A2}^1]$) temporal intervals and said first ($NT_B^1$), second ($NT_{A1}^1$) and third ($NT_{A2}^1$) values of the first common temporal reference (NT) ;

and wherein the step d) comprises the operations of:

d1) determining a ninth ($[T_{A1}{}^2]$) and a tenth ($[T_{A2}{}^2]$) temporal interval, bounded by a sixth and seventh pair of time values ($T_A$) of the second clock ($H_A$), respectively, and belonging to the second temporal range (P4), such that the second temporal interval ($[T_B{}^2]$) falls in the range between said ninth ($[T_{A1}{}^2]$) and tenth ($[T_{A2}{}^2]$) intervals;

d2) determining a fourth ($NT_B{}^2$), fifth ($NT_{A1}{}^2$) and sixth ($NT_{A2}{}^2$) value of the first common temporal reference (NT), included in said second ($[T_B{}^2]$), ninth ($[T_{A1}{}^2]$) and tenth ($[T_{A2}{}^2]$) temporal intervals, respectively;

d3) calculating, by interpolation, said fourth ($[T_{AB}{}^2]$) temporal intervals, using said second ($[T_B{}^2]$), ninth ($[T_{A1}{}^2]$) and tenth ($[T_{A2}{}^2]$) temporal intervals and said fourth ($NT_B{}^2$), fifth ($NT_{A1}{}^2$) and sixth ($NT_{A2}{}^2$) values of the first common temporal reference (NT).

**3.** The method as claimed in claim 1, wherein the step c) comprises the operations of:

c1) determining a seventh ($T_{A1}{}^1$) and an eighth ($T_{A2}{}^1$) time value ($T_A$) of the second clock ($H_A$) belonging to the first temporal range (P1), such that said first temporal interval ($[T_B{}^1]$) falls in the range between said seventh ($T_{A1}{}^1$) and eighth ($T_{A2}{}^1$) values;

c2) determining a first ($[NT_B{}^1]$), second ($[NT_{A1}{}^1]$) and third ($[NT_{A2}{}^1]$) interval of values of the first common temporal reference (NT), comprising said first temporal interval ($[T_B{}^1]$) and said seventh ($T_{A1}{}^1$) and eighth ($T_{A2}{}^1$) time values ($T_A$) of the second clock ($H_A$), respectively;

c3) calculating, by interpolation, said third ($[T_{AB}{}^1]$) temporal interval, using said first interval ($[T_B{}^1]$) of time values ($T_B$) of the first clock ($H_B$), said seventh ($T_{A1}{}^1$) and eighth ($T_{A2}{}^1$) time values ($T_A$) of the second clock ($H_A$) and said first ($[NT_B{}^1]$), second ($[NT_{A1}{}^1]$) and third ($[NT_{A2}{}^1]$) intervals of values of the first common temporal reference (NT) ;

and wherein the step d) comprises the operations of:

d1) determining a ninth ($T_{A1}{}^2$) and a tenth ($T_{A2}{}^2$) time values ($T_A$) of the second clock ($H_A$) belonging to the second temporal range (P4), such that said second temporal interval ($[T_B{}^2]$) falls in the range between said ninth ($T_{A1}{}^2$) and tenth ($T_{A2}{}^2$) values ;

d2) determining fourth ($[NT_B{}^2]$), fifth ($[NT_{A1}{}^2]$) and sixth ($[NT_{A2}{}^2]$) intervals of values of the first common temporal reference (NT), comprising said second ($[T_B{}^2]$) temporal interval and said ninth ($T_{A1}{}^2$) and tenth ($T_{A2}{}^2$) time values ($T_A$) of the second clock ($H_A$);

d3) calculating, by interpolation, said fourth ($[T_{AB}{}^2]$) temporal interval, using said second interval ($[T_B{}^2]$) of time values ($T_B$) of the first clock ($H_B$), said ninth ($T_{A1}{}^1$) and tenth ($T_{A2}{}^1$) time values ($T_A$) of the second clock ($H_A$) and said fourth ($[NT_B{}^1]$), fifth ($[NT_{A1}{}^1]$) and sixth ($[NT_{A2}{}^1]$) intervals of values of the first common temporal reference (NT).

**4.** The method as claimed in claim 2, wherein the operation c3) is carried out by replacing said first ($NT_B{}^1$), second ($NT_{A1}{}^1$) and third ($NT_{A2}{}^1$) values of the common temporal reference (NT) by temporal intervals ($[NT_B{}^1]$, $[NT_{A1}{}^1]$, $[NT_{A2}{}^1]$) whose width is equal to the discretization of the first common temporal reference (NT) over the first temporal range (P1), and wherein the operation d3) is carried out by replacing said fourth ($NT_B{}^2$), fifth ($NT_{A1}{}^2$) and sixth ($NT_{A2}{}^2$) values of the common temporal reference (NT) by temporal intervals ($[NT_B{}^2]$, $[NT_{A1}{}^2]$, $[NT_{A2}{}^2]$) whose width is equal to the discretization of the first common temporal reference (NT) over the second temporal range (P4).

**5.** The method as claimed in claim 3, wherein the operations c3) and d3) are carried out by replacing said seventh ($T_{A1}{}^1$), eighth ($T_{A2}{}^1$), ninth ($T_{A1}{}^2$) and tenth ($T_{A2}{}^2$) time values ($T_A$) of the second clock ($H_A$) by temporal intervals ($[T_{A1}{}^1]$, $[T_{A1}{}^2]$, $[T_{A2}{}^1]$, $[T_{A2}{}^2]$) whose width is equal to the discretization of the time ($T_A$) of the second clock ($H_A$).

**6.** The method as claimed in either of claims 2 and 4 wherein, during the temporal range or ranges (P1, P4) over which a first common temporal reference (NT) exists, a first reading of the first clock (TL1 - FHB) is recorded several times, followed by a reading of the first common temporal reference (TR - FHB) and, subsequently, by a second reading of the first clock (TL2 - FHB), and independently, a first reading of the second clock (TL1 - FHA) is recorded, also several times, followed by a reading of the first common temporal reference (TR - FHA) and then by a second reading of the second clock (TL2 - FHA), and wherein the operations c1), c2), c3), d1), d2) and d3) are performed using these recordings.

7. The method as claimed in either of claims 3 and 5 wherein, during the temporal range or ranges (P1, P4) over which a first common temporal reference (NT) exists, a first reading of the first common temporal reference (NT) is recorded several times, followed by a reading of the first clock ($H_B$) and, subsequently, by a second reading of the first common temporal reference (NT), and independently, a first reading of the first common temporal reference (NT) is recorded, also several times, followed by a reading of the second clock ($H_A$) and then by a second reading of the first common temporal reference (NT), and wherein the operations c1), c2), c3), d1), d2) and d3) are performed using these recordings.

8. The method as claimed in one of claims 1 to 7 wherein the step e) is carried out by linear interpolation by intervals or by linear extrapolation by intervals.

9. The method as claimed in one of claims 2 to 7, or 8 when the latter depends on either of claims 2 and 3, wherein the operations c3) and d3) are performed by linear interpolation by intervals.

10. The method as claimed in one of claims 1 to 9 wherein the first temporal reference (NT) common to the first and to the second clock exists over at least two separate temporal ranges (P1, P4) and can comprise a rupture of monotonicity from one temporal range to the other, a second monotonic common temporal reference (TMR - NMR) being used in order to resolve the ambiguities resulting from the non-monotonicity of the first common temporal reference (NT).

11. A method for synchronizing data recorded and date stamped by a first machine (B), having a first clock ($H_B$), with respect to the local time of a second machine (A), having a second clock ($H_A$), **characterized in that** the date stamping is carried out by associating with each data value recorded by the first machine a fifth temporal interval ($[T_B]$), bounded by a third pair of time values ($T_B$) of the first clock ($H_B$), and **in that** the synchronization is performed by determining, by a method as claimed in one of claims 1 to 10, a sixth temporal interval ($[T_{AB}]$), bounded by a third pair of time values ($T_A$) of the second clock ($H_A$) and containing said fifth temporal interval ($[T_B]$).

12. The method as claimed in claim 11 wherein the first common temporal reference (NT) is supplied by a clock ($H_{BUS}$) of a synchronous bus (BUS) which connects, at least temporarily, said first and second machines.

13. The method as claimed in either of claims 11 and 12, which may be broken down into a first sub-process for recording clock readings as claimed in either of claims 6 and 7, carried out locally by each machine whose data it is desired to synchronize, and a second process for the synchronization itself, effected by a machine toward which all the data has been transferred after the termination of the data recording session.

$T_A, T_B$

$T_B$

$T_B(t_0)$

$T_A$

$T_A(t_0)$

$t_0$    t

Fig.1A

$T_A, T_B$

$T_B$

$T_B^0$

$T_A$

$T_A''$

$[T_{AB}]$   $T_A'$

$t_1$ $t_0$ $t_2$    t

Fig.1B

Fig.2

EP 1 728 140 B1

Fig.3A

$A$ [X]     $C \ \gamma_1$

$B$ [X]

$A \ \alpha_1$     $C \ \gamma_2$   Fig.3B

$B$ [X]

Fig.3C   $A \ \alpha_2$     $C \ \gamma_3$

$B$ [X]

$A \ \alpha_2$     $C \ \gamma_3$   Fig.3D

$B \ \beta_1$

Fig.3E   $A \ \alpha_2$     $C \ \gamma_4$

$B \ \beta_2$

$A \ \alpha_2$     $C \ \gamma_5$   Fig.3F

$B \ \beta_3$

Fig.3G   $A \ \alpha_3$     $C \ \gamma_5$

$B \ \beta_4$

$A \ \alpha_4$     $C \ \gamma_6$   Fig.3H

$B \ \beta_5$

Fig.3I   $A \ \alpha_5$     $C \ \gamma_7$

$B \ \beta_6$

$A \ \alpha_6$     $C \ \gamma_8$   Fig.3J

$B \ \beta_7$

Fig.3K   $A \ \alpha_7$     $C \ \gamma_9$

$B \ \beta_8$

$A \ \alpha_8$     $C \ \gamma_9$   Fig.3L

$B \ \beta_9$

Fig.4

Fig.5

E1 CONSTITUTION DES FICHIERS HORODATEURS
ENREGISTREMENT ET DATATION LOCALE DES DONNEES

FIN DE LA SESSION D'ENREGISTREMENT DES DONNEES

E2 DETERMINATION DES RELATIONS TEMPORELLES ENTRE LES
SECTIONS DES FICHIERS HORODATEURS ET PLAGES
TEMPORELLES COMMUNES AUX MACHINES A ET B

E3 DETERMINATION DE $[T_B^1]$ ET $[T_B^2]$ A PARTIR DU FICHIER
HORODATEUR DE LA MACHINE B

E4 DETERMINATION DE $[T_{A1}^1]$, $[T_{A2}^1]$, $[T_{A1}^2]$, $[T_{A2}^2]$, ET DE $[NT_{A1}^1]$, $[NT_{A2}^1]$
$[NT_{A1}^2]$, $[NT_{A2}^2]$ A PARTIR DU FICHIER HORODATEUR DE LA
MACHINE A

E5 DETERMINATION DE $[T_{AB}^1]$, $[T_{AB}^2]$ (EQUATION 3), DE $[off_{AB}^1]$, $[off_{AB}^2]$
(EQUATION 4) ET DE $[drift_{AB}]$ (EQUATION 5)

E6 POUR CHAQUE DONNEE ENREGISTREE PAR LA MACHINE B AVEC
UNE DATE $[T_B]$, DETERMINATION DE $[T_{AB}]$ (EQUATIONS 6.1, 6.1, 7 OU 8)

FIN

## Fig.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0042924 A

- EP 1380918 A

**Littérature non-brevet citée dans la description**

- **J.A. FONSECA ; P. FONSECA.** An overview of clock synchronization solutions. *4th IFAC International Symposium, Sicica, Argentina,* 2000
- **G. BLAKOWSKI ; R. STEINMETZ.** A media synchro-nization survey : reference model, specification, and case studies. *IEEE J. Selected Areas Commun,* 1996, vol. 141, 5-35

- **L. JAULIN ; M. KIEFFER ; O. DIRIT ; E. WALTER.** Applied Interval Analysis. Springer-Verlag, 2001